# EUROPEAN PATENT SPECIFICATION

(11) **EP 4 008 925 B1**
(45) Date of publication and mention of the grant of the patent: **01.01.2025**
(21) Application number: 20846539.3
(22) Date of filing: 29.07.2020
(51) Int. Cl.: F16D 41/06, F16D 41/07, F16D 41/08, F16C 32/00, B60R 7/04

(54) **INTERIOR VEHICLE COMPONENT**
KOMPONENT FÜR DEN INNENRAUM EINES FAHRZEUGS
ÉLEMENT COMPOSANT DE L'INTÉRIEUR DU VÉHICULE

(30) Priority: 29.07.2019 CN 201910693297
(43) Date of publication of application: 08.06.2022
(73) Proprietor: Shanghai Yanfeng Jinqiao Automotive Trim Systems Co., Ltd., Shanghai 201206 (CN)
(72) Inventor: ZHANG, Junwei, Shanghai 201206 (CN)
(74) Representative: Meissner Bolte Partnerschaft mbB
(86) International application number: PCT/CN2020/105371
(87) International publication number: WO 2021/018164

(56) References cited:
- CN-A- 101 328 937
- CN-A- 101 328 937
- CN-A- 101 328 937
- CN-A- 104 015 640
- CN-A- 104 015 640
- CN-A- 104 015 640
- CN-A- 110 332 254
- CN-U- 207 565 490
- DE-A1- 102013 003 954
- JP-A- 2011 231 828
- JP-A- 2011 231 828

## Description

### FIELD OF THE INVENTION

The present invention relates to a vehicle interior component.

### BACKGROUND

According to different configuration requirements, armrest assembly parts can be mounted on a vehicle console, providing a position for a driver or occupant to comfortably place elbows; meanwhile, most armrest assemblies have the function of overturning and opening, a storage space can be designed in the console, thus the armrest assembly is functioned as a storage box cover. However, most armrests generally provide support for the elbow of the occupant only when they are closed, and cannot provide support when opened. Therefore, such an armrest assembly has a single position and cannot meet body sizes or requirements of as many occupants as possible.

At present, with the continuous improvement of customers' demand, several armrest rotating shaft mechanisms capable of adjusting the position of a rotating hand rest during the overturning process have also been introduced in the industry. For example, Patents Nos. DE102006048107B4, DE102009031702A1, DE102011017083B4, WO2004018253A1, CN100509479C, CN102729861B, DE19904410C2, DE102006014822A1 and CN100519265C disclose an armrest rotating shaft mechanism capable of adjusting the position of a rotating hand rest during overturning process, and all of the armrest rotating shaft mechanisms adopt one-way ratchet teeth or ratchet gear to realize the function of mechanical movement. The specific mechanical movement principle of the rotating shaft mechanism is as follows: the armrest, before overturned to a particular angle (e.g., 45 degrees), can be enabled to load-bear the hand rest in 3-4 or more angular positions, and the armrest can only move in the rotating opening direction but cannot move in the rotating closing direction in these positions, so that the armrest assembly can provide the occupant with adjustable and different hand rest positions in the rotating process; when it is not desirable to use a particular hand rest or adjustment position of the armrest or to close the armrest assembly, the armrest assembly can be rotated back to the closed position by merely overturning the armrest assembly over that particular angle (e.g., 45 degrees); during the closing of the armrest, no further situation will occur in which the armrest cannot be closed as has previously occurred during opening of the armrest. In the above series of movement processes, other switch mechanisms are not needed, and the armrest only needs to be overturned.

However, since the number of load-bearing positions of the above conventional armrest is limited to the number of one-way ratchet teeth, only several positions, i.e., one-way multi-stage load-bearing rotating shaft mechanisms, can be provided within the functional rotation angle of the armrest, and thus the conventional armrest is not suitable for more users. Meanwhile, certain abnormal sound can be generated and needs to be eliminated by adding a buffer part due to the intermittent meshing of the ratchet teeth.

At present, a one-way stepless bearing rotating shaft mechanism, a ratchet teeth mechanism, and a ball type one-way bearing mechanism and a labyrinth mechanism are combined with each other to realize the function of stepless adjustment of the load-bearing position in the prior art. However, there are more load-bearing parts in the one-way ratchet teeth mechanism and the ball type one-way bearing mechanism, which leads to relatively higher cost.

In view of the above circumstances, it is desirable to design a novel one-way bearing assembly at present, so as to realize that any position within the rotation functional angle can load-bear hand rests without adding special buffer parts to eliminate abnormal sound. Meanwhile, the novel one-way bearing assembly has a simplified mechanism and lower cost than the existing stepless load-bearing rotating shaft mechanism. For prior art, see CN104015640, DE102013003954, CN101328937 and JP2011231828.

### SUMMARY

In order to solve the above problems in the prior art, the present invention aims to provide a one-way bearing assembly and use thereof, so as to realize load bearing at any position, with no abnormal sound and reduced load-bearing parts.

Let consider a one-way bearing assembly, comprising: a rotating ring, a fixed ring coaxially disposed with the rotating ring, a plurality of sprags disposed between the rotating ring and the fixed ring, and an unlocking mechanism provided to switch the rotating ring between a locking state and an unlocking state, wherein the rotating ring is rotatable in a first direction while not rotatable in a second direction opposite to the first direction when the rotating ring is in the locking state; the rotating ring is rotatable in both the first direction and the second direction when the rotating ring is in the unlocking state.

The rotating ring switches between the locking state and the unlocking state in response to the deflection of the plurality of sprags.

The sprag is eccentrically tangent to the rotating ring and to the fixed ring, when the rotating ring is in the locking state, forming a self-locking angle respectively; and a gap is formed between the sprag and at least one of the rotating rings and the fixed ring when the rotating ring is in the unlocking state.

The unlocking mechanism comprises an unlocking ring disposed between the rotating ring and the fixed ring, and the rotating ring switches between the locking state and the unlocking state in response to the rotation of the unlocking ring.

The unlocking ring is disposed proximate the rotating ring, the unlocking ring can rotate along the first direction but cannot rotate along the second direction, and the unlocking ring switches the rotating ring from the locking state to the unlocking state by rotation in the first direction.

The plurality of sprags deflect in response to the rotation of the unlocking ring.

The deflection direction of the sprags is opposite to the rotation direction of the unlocking ring when the unlocking ring is disposed outside and proximate to the rotating ring; the deflection direction of the sprags is the same as the rotation direction of the unlocking ring when the unlocking ring is disposed inside and proximate to the rotating ring.

The unlocking ring comprises a plurality of unlocking ribs on the same circular arc trajectory.

A single unlocking rib is disposed between two adjacent sprags, and the unlocking rib pushes the sprags to deflect in response to the rotation of the unlocking ring.

The sprag has opposing stop surface and unlocking surface, wherein the stop surface is in close contact with the unlocking rib when the rotating ring is in the locking state, and the unlocking surface is in close contact with the unlocking rib when the rotating ring is in the unlocking state.

The unlocking mechanism further comprises a clutch wheel that pushes the unlocking ring to rotate.

The clutch wheel is provided with trapezoidal grooves, the unlocking ring is provided with trapezoidal ribs, and the trapezoidal ribs are disengaged from the trapezoidal grooves when the rotating ring is in the unlocking state.

The clutch wheel is provided with stroke control slots, an outer ring is provided with stroke control ribs, and the outer ring drives the clutch wheel to rotate by the movement of the stroke control ribs in the stroke control slots.

The unlocking mechanism further comprises a torsion spring having one end connected to the unlocking ring, and the unlocking ring is applied with a torque that make the sprag remain the unlocking state.

The unlocking mechanism further comprises a helical compression spring that applies a force to compress the clutch wheel on the unlocking ring, and the force counteracts the torque applied to the unlocking ring by the torsion spring when the unlocking ring is in the locking state.

The one-way bearing assembly further comprises a cage for receiving a plurality of sprags, and the cage is disposed stationary relative to the fixed ring.

The sprag further comprises a fixed shaft connected to the cage, and the sprag deflects relative to the cage by the fixed shaft.

The one-way bearing assembly further comprises a spring ring, the sprag comprises a countersunk groove for receiving the spring ring, and the spring ring is provided to restrain a plurality of sprags in the cage.

The spring ring applies a torque to the sprag that switches the rotating ring to the locking state from the unlocking state.

The cage and the spring ring are each disposed between the fixed ring and the rotating ring.

The countersunk groove comprises a groove bottom composed of first and second arc surfaces that are not concentric and have different radii.

The plurality of sprags are disposed in a circular array uniformly and rotationally symmetrically.

The present invention provides a vehicle interior component according to the appended claims and inter alia, comprising: a base comprising an opening; an armrest configured to cover the opening of the base and configured to move from a closed position through a load-bearing position to a maximum open position; and a mechanism connecting the armrest to the base and configured to (a) facilitate the movement of the armrest from the closed position to the load-bearing position, (b) maintain the armrest in the load-bearing position when the armrest moves from the closed position to the load-bearing position, and (c) restrict the armrest from moving from the load-bearing position to the closed position.

The mechanism is configured to allow the armrest to move toward the closed position when the armrest is in a position between the load-bearing position and the maximum open position.

The mechanism is configured to maintain the armrest in an intermediate position when the armrest moves from the closed position to at least one intermediate position between the closed position and the load-bearing position.

The mechanism is configured to restrict the armrest from moving from the intermediate position to the closed position.

The armrest is configured to be allowed to move from the closed position to the load-bearing position without a latch.

The mechanism comprises an unlocking mechanism provided to switch the armrest between a locking state and an unlocking state and, when in the unlocking state, to allow the movement of the armrest to the closed position.

The armrest is configured to rotate around a rotating shaft from the closed position to the load-bearing position, and the armrest is configured to rotate around the rotating shaft from the load-bearing position to the maximum open position.

The mechanism is configured to rotate around the rotating shaft.

The mechanism comprises a fixed ring fixed to the rotating shaft and a rotating ring configured to rotate with the armrest.

The rotating ring is axially aligned with the fixed ring.

The rotating shaft is fixed to a fixed bracket, the base is connected to the fixed bracket, and the armrest is connected to the rotating ring by a rotating bracket.

The rotating shaft comprises a spline shaft.

Spline holes are disposed at two axial ends of the fixed bracket, bracket spline holes are disposed at the rotating bracket, a shaft sleeve, a disc spring and a friction damping ring are sequentially mounted between one spline hole of the fixed bracket and the bracket spline hole of the rotating bracket, the shaft sleeve is fixed on the fixed bracket, and the friction damping ring abuts against the rotating bracket; another shaft sleeve and a positioning friction damping ring are mounted between the other spline hole of the fixed bracket and the rotating bracket.

The mechanism comprises a rack configured to move with the armrest and a gear configured to engage the rack, and the axial center of the gear is fixedly connected with the base.

The mechanism comprises a fixed ring fixedly connecting the axial center of the gear to the base, and the gear is disposed on the rotating ring.

The axial center of the gear is fixedly connected to the base by a fixed bracket, and the rack is located on a sliding bracket connected to the armrest.

The vehicle interior component further comprises a coil spring connected to each of the base and the armrest to provide a force to move the armrest toward the closed position.

The armrest comprises a cover.

The rotating ring is axially aligned with the fixed ring.

At least one sprag is disposed between the rotating ring and the fixed ring.

The at least one sprag is configured to restrict the armrest from moving from the load-bearing position to the closed position.

The at least one sprag is configured to restrict the movement of the rotating ring.

The mechanism comprises the one-way bearing assembly according to the above.

The one-way bearing assembly of the present invention forms a one-way bearing by the direct contact of a brake sprag sleeved on an inner ring with the opposite wall surfaces of the inner ring and an outer ring under the locking state, so that the rotating device can be stopped at any desired position infinitely; a labyrinth mechanism comprised of a locking ring and a clutch wheel is adopted, when the rotating device rotates beyond a certain maximum angle by a user, the outer ring rotates the relative rotating angle between the outer ring and the clutch wheel to reach the maximum angle, the clutch wheel is pushed to rotate, the unlocking ring is driven to rotate, and the unlocking rib of the unlocking ring pushes the brake sprag, thereby the one-way bearing is relieved responding to the requirements of the user, which means that the one-way bearing assembly is suitable for more users to the greatest extent. Moreover, the one-way bearing assembly avoids the intermittent meshing of ratchet teeth in the prior art, thereby eliminating abnormal sound and achieving silence.

### BRIEF DESCRIPTION OF DRAWINGS

FIG. 1A is an interior schematic perspective view of a vehicle comprising a one-way bearing assembly;
FIG. 1B is an interior schematic perspective view of the vehicle in FIG. 1A viewed from another angle;

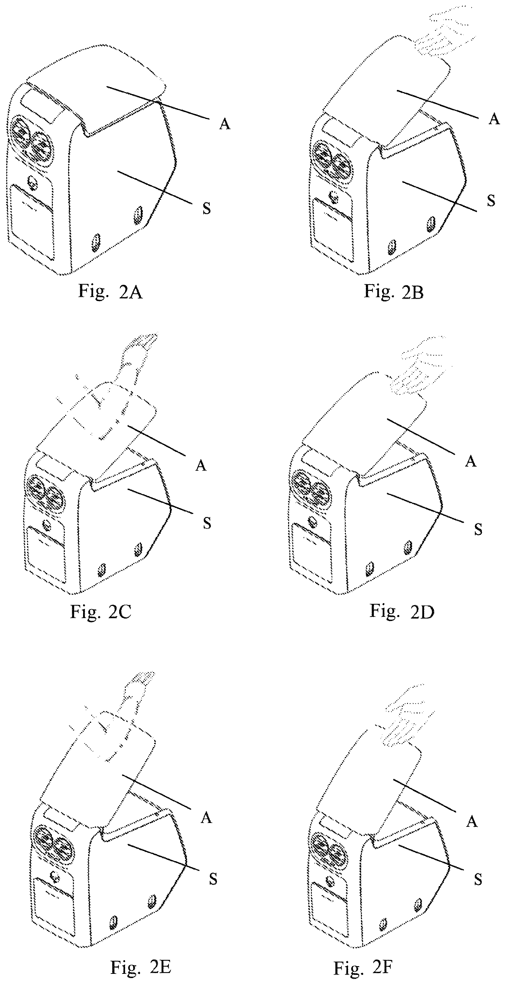

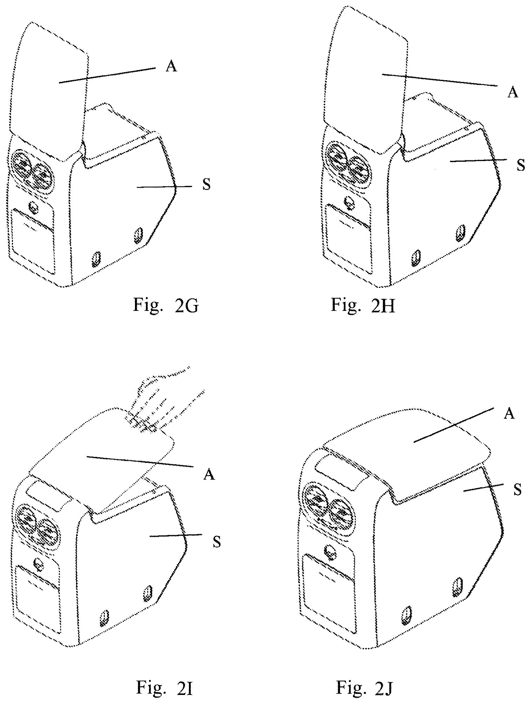

FIGs. 2A-2J are schematic views of a vehicle interior component (e.g., an armrest) having the one-way bearing assembly according to the present invention in various movement stages, wherein FIG. 2A shows the armrest in the closed position, FIGs. 2B-2C show the process where the armrest is manually overturned to and retained in the intermediate position, FIGs. 2D-2E show the process where the armrest is continuously manually overturned to and retained in the load-bearing position, FIGs. 2F-2G show the process where the armrest is continuously manually overturned to the maximum open position, and FIGs. 2H-2J show the process where the armrest passes from the maximum open position back to the closed position;
FIG. 3A is a schematic view of a rotating shaft mechanism comprising the one-way bearing assembly according to Embodiment 1 of the present invention;
FIG. 3B is an exploded schematic view of the rotating shaft mechanism in FIG. 3A;
FIG. 3C is an exploded schematic view of the rotating shaft mechanism in FIG. 3B with the fixed bracket and the rotating bracket removed;

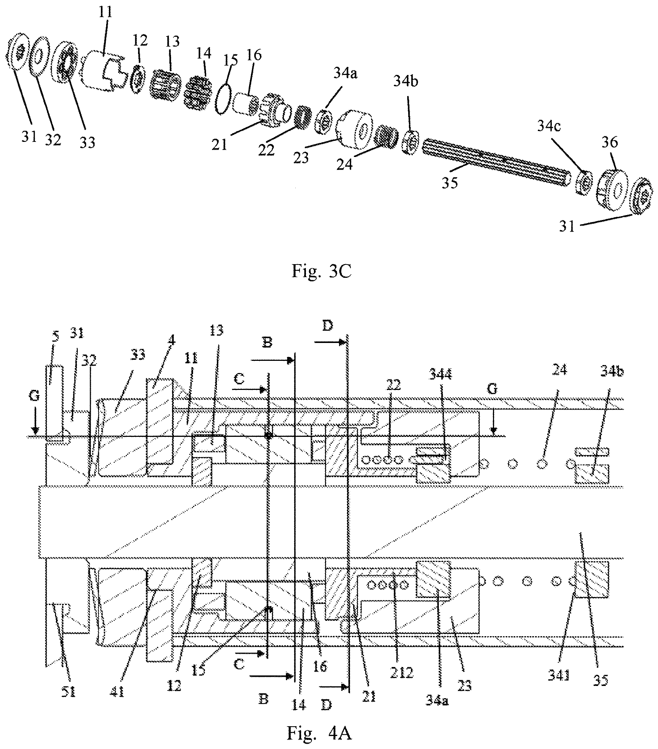

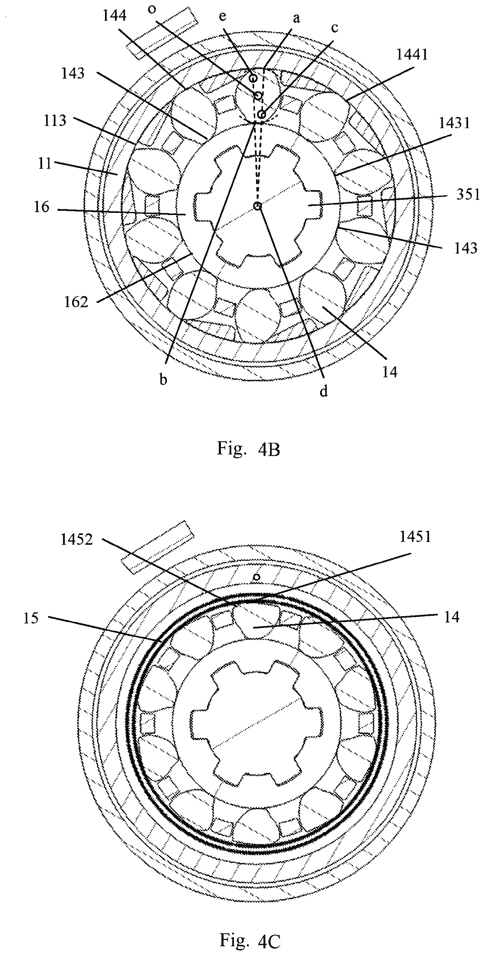

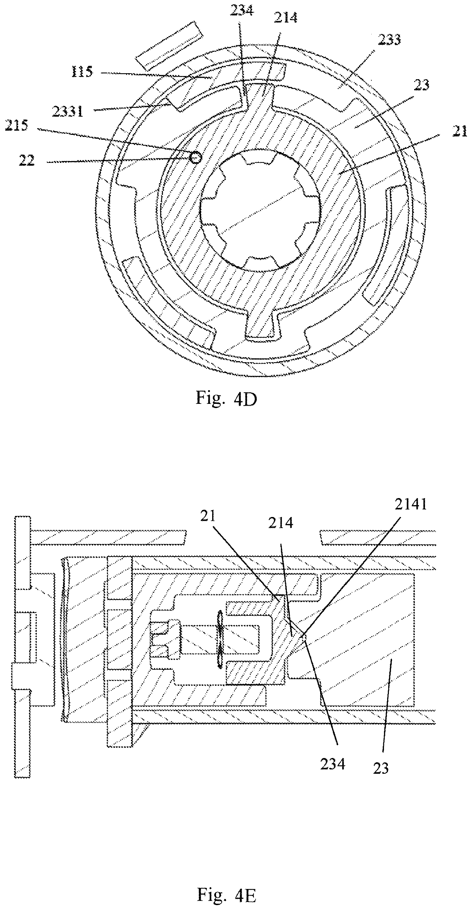

FIGs. 4A-4E are cross-sectional schematic views of a vehicle interior component having the one-way bearing assembly according to the present invention with the armrest of the vehicle interior component in the position shown in FIG. 2A, wherein FIG. 4A is an axial cross-sectional schematic view of the vehicle interior component at the rotating shaft with the armrest of the vehicle interior component in the position shown in FIG. 2A, FIG. 4B is a cross-sectional schematic view taken along line B-B of FIG. 4A with the armrest of the vehicle interior component in the position shown in FIG. 2A, showing the positional relationship of the brake sprag with the inner and outer rings, FIG. 4C is a cross-sectional schematic view taken along line C-C of FIG. 4A with the armrest of the vehicle interior component in the position shown in FIG. 2A, showing the positional relationship of the brake sprag and spring ring, FIG. 4D is a cross-sectional schematic view taken along line D-D of FIG. 4A with the armrest of the vehicle interior component in the position shown in FIG. 2A, showing that stroke control ribs are in contact with the start end surfaces of stroke control slots and a unlocking ring is in contact with the start end surface of a trapezoidal groove, and FIG. 4E is a cross-sectional schematic view taken along line E-E of FIG. 4A with the armrest of the vehicle interior component in the position shown in FIG. 2A;

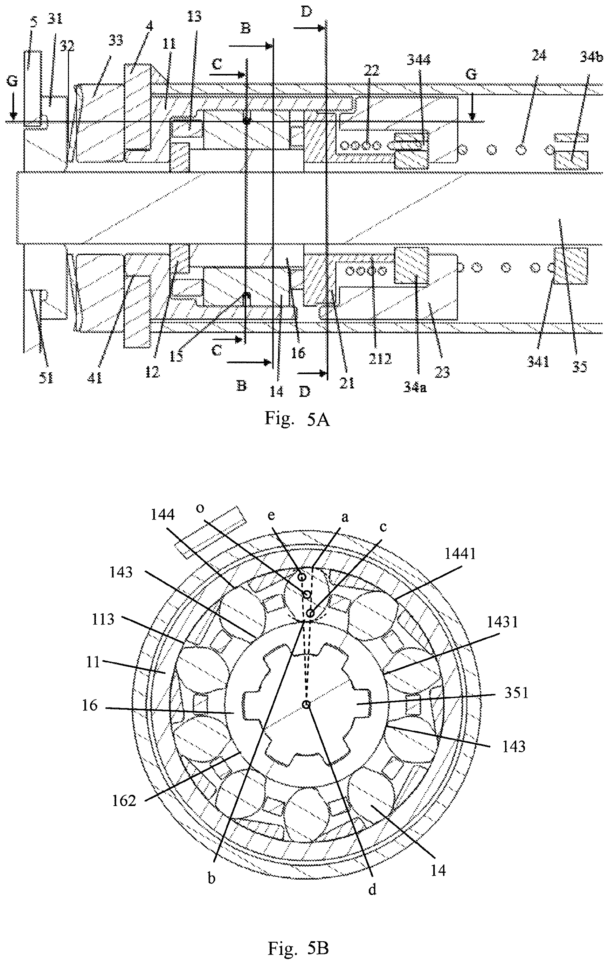

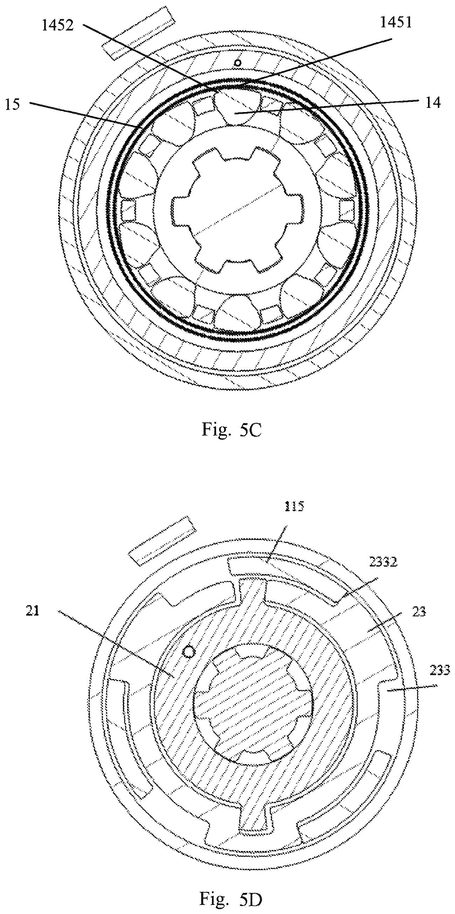

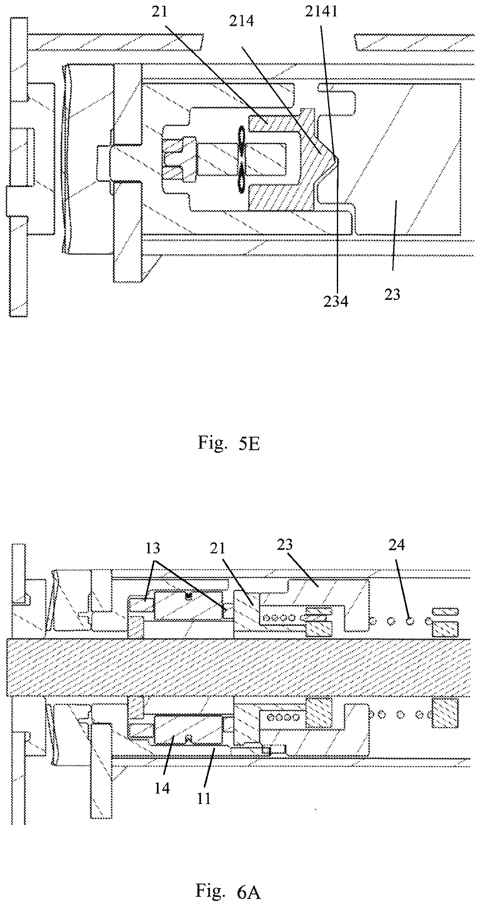

FIGs. 5A-5E are cross-sectional schematic views of a vehicle interior component having the one-way bearing assembly according to the present invention with the armrest of the vehicle interior component in the position shown in FIGs. 2C and 2D, wherein FIG. 5A is an axial cross-sectional schematic view of the vehicle interior component at the rotating shaft with the armrest of the vehicle interior component in the position shown in FIGs. 2C and 2D, FIG. 5B is a cross-sectional schematic view taken along line B-B of FIG. 5A with the armrest of the vehicle interior component in the position shown in FIGs. 2C and 2D, FIG. 5C is a cross-sectional schematic view taken along line C-C of FIG. 5A with the armrest of the vehicle interior component in the position shown in FIGs. 2C and 2D, FIG. 5D is a cross-sectional schematic view taken along line D-D of FIG. 5A with the armrest of the vehicle interior component in the position shown in FIGs. 2C and 2D, and FIG. 5E is a cross-sectional schematic view taken along line E-E of FIG. 5A with the armrest of the vehicle interior component in the position shown in FIGs. 2C and 2D;

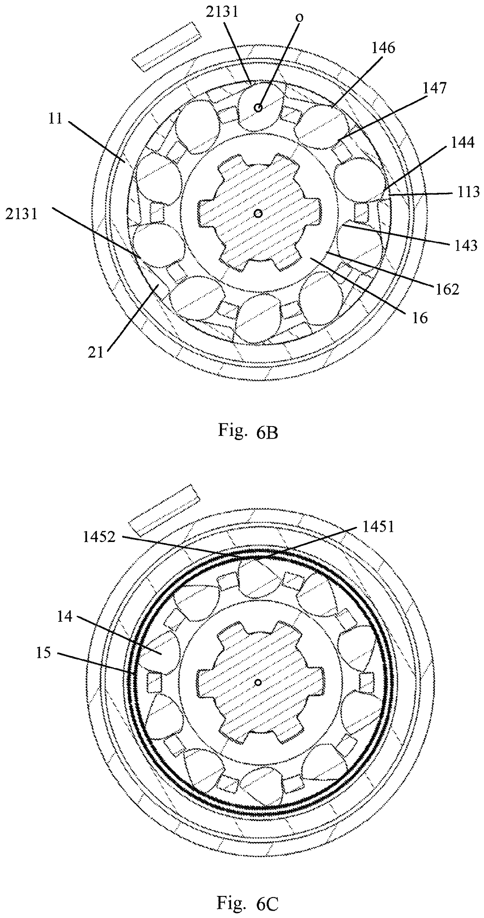

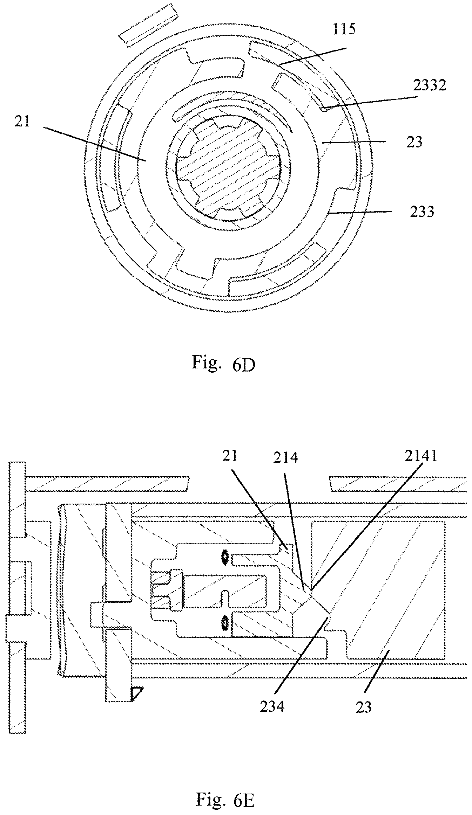

FIGs. 6A-6E are cross-sectional schematic views of a vehicle interior component having the one-way bearing assembly according to the present invention with an armrest of the vehicle interior component in the position shown in FIGs. 2E and 2F, wherein FIG. 6A is an axial cross-sectional schematic view of the vehicle interior component at the rotating shaft with the armrest of the vehicle interior component in the position shown in FIGs. 2E and 2F, FIG. 6B is a cross-sectional schematic view of the position of the sprag (the position corresponds to the section of line B-B in FIG. 5A) with the armrest of the vehicle interior component in the position shown in FIGs. 2E and 2F, FIG. 6C is a cross-sectional schematic view of the position of the spring ring (the position corresponds to the section of line C-C in FIG. 5A) with the armrest of the vehicle interior component in the position shown in FIGs. 2E and 2F, FIG. 6D is a cross-sectional schematic view of the position of the clutch wheel (the position corresponds to the section of line D-D in FIG. 5A) with the armrest of the vehicle interior component in the position shown in FIGs. 2E and 2F, and FIG. 6E is a cross-sectional schematic view of the vehicle interior component at a position parallel to the rotating shaft and passing through the spring ring (the position corresponds to the section of line E-E in FIG. 5A) with the armrest of the vehicle interior component in the position shown in FIGs. 2E and 2F;

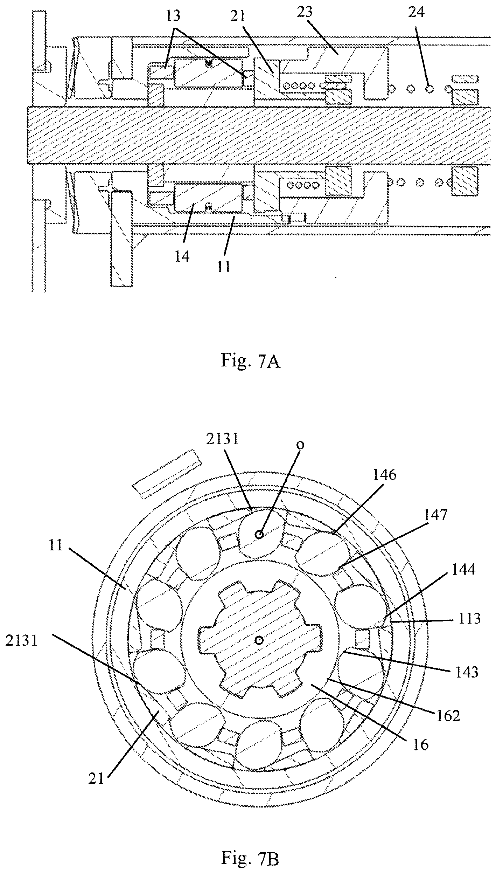

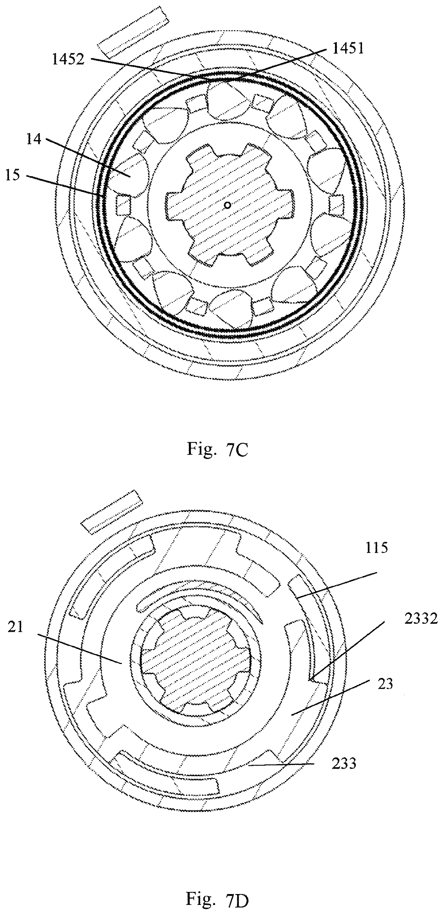

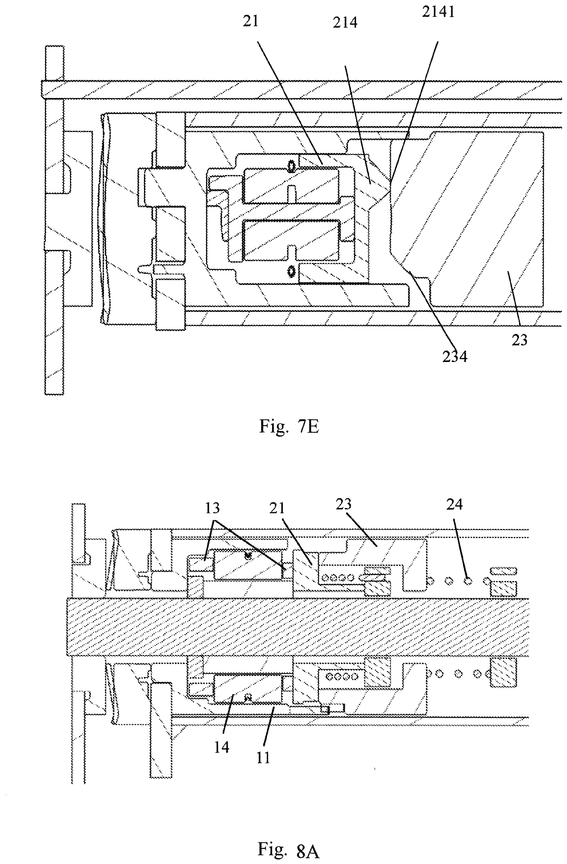

FIGs. 7A-7E are cross-sectional schematic views of a vehicle interior component having the one-way bearing assembly according to the present invention with an armrest of the vehicle interior component in the position shown in FIGs. 2G and 2H, wherein FIG. 7A is an axial cross-sectional schematic view of the vehicle interior component at the rotating shaft with the armrest of the vehicle interior component in the position shown in FIGs. 2G and 2H, FIG. 7B is a cross-sectional schematic view of the position of the sprag (the position corresponds to the section of line B-B in FIG. 5A) with the armrest of the vehicle interior component in the position shown in FIGs. 2G and 2H, FIG. 7C is a cross-sectional schematic view of the position of the spring ring (the position corresponds to the section of line C-C in FIG. 5A) with the armrest of the vehicle interior component in the position shown in FIGs. 2G and 2H, FIG. 7D is a cross-sectional schematic view of the position of the clutch wheel (the position corresponds to the section of line D-D in FIG. 5A) with the armrest of the vehicle interior component in the position shown in FIGs. 2G and 2H, and FIG. 7E is a cross-sectional schematic view of the vehicle interior component at a position parallel to the rotating shaft and passing through the spring ring (the position corresponds to the section of line E-E in FIG. 5A) with the armrest of the vehicle interior component in the position shown in FIGs. 2G and 2H;

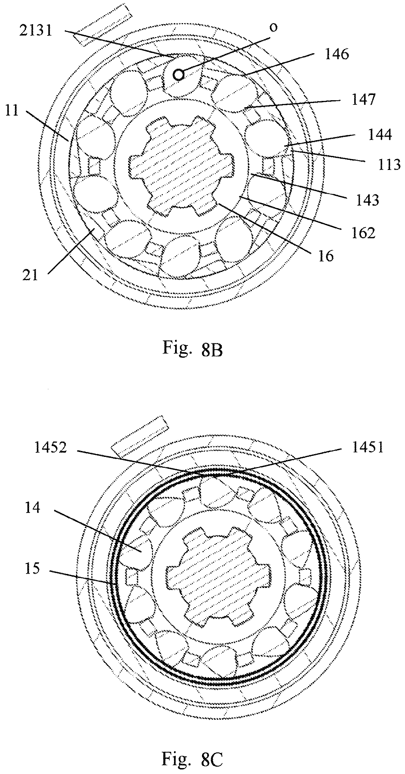

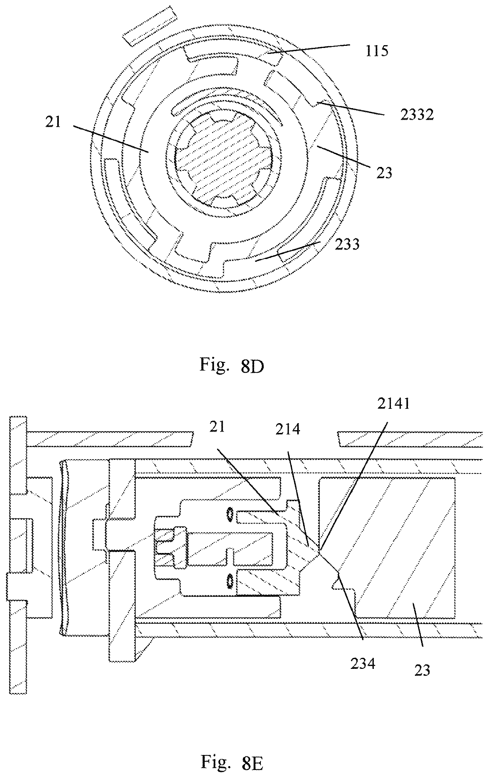

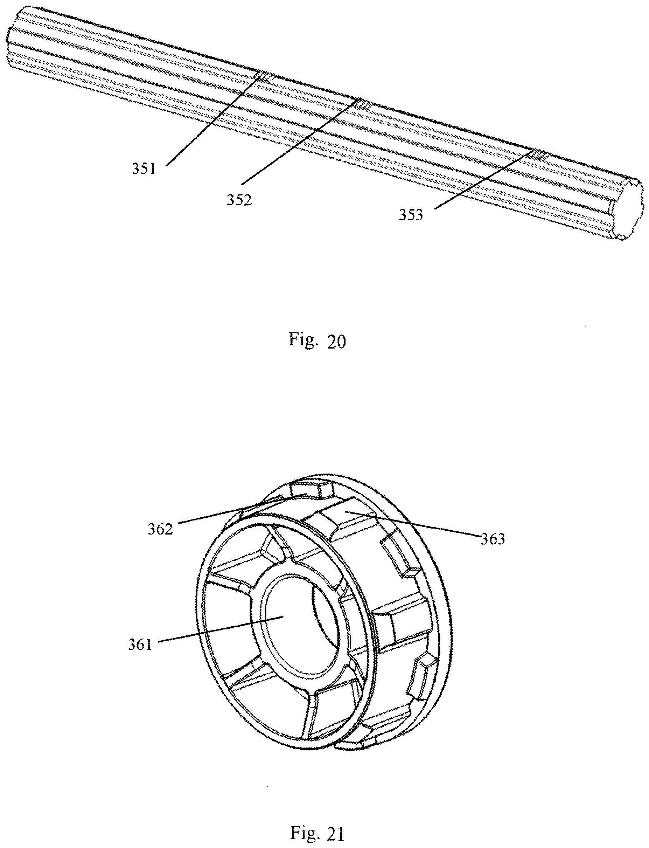

FIGs. 8A-8E are cross-sectional schematic views of a vehicle interior component having the one-way bearing assembly according to the present invention with an armrest of the vehicle interior component in the position shown in FIG. 21, wherein FIG. 8A is an axial cross-sectional schematic view of the vehicle interior component at the rotating shaft with the armrest of the vehicle interior component in the position shown in FIG. 2I, FIG. 8B is a cross-sectional schematic view of the position of the sprag (the position corresponding to the section of line B-B in FIG. 5A) with the armrest of the vehicle interior component in the position shown in FIG. 21, FIG. 8C is a cross-sectional schematic view of the position of the spring ring (the position corresponding to the section of line C-C in FIG. 5A) with the armrest of the vehicle interior component in the position shown in FIG. 21, FIG. 8D is a cross-sectional schematic view of the position of the clutch wheel (the position corresponding to the section of line D-D in FIG. 5A) with the armrest of the vehicle interior component in the position shown in FIG. 21, and FIG. 8E is a cross-sectional schematic view of the vehicle interior component at a position parallel to the rotating shaft and passing through the spring ring (the position corresponding to the section of line E-E in FIG. 5A) with the armrest of the vehicle interior component in the position shown in FIG. 21;

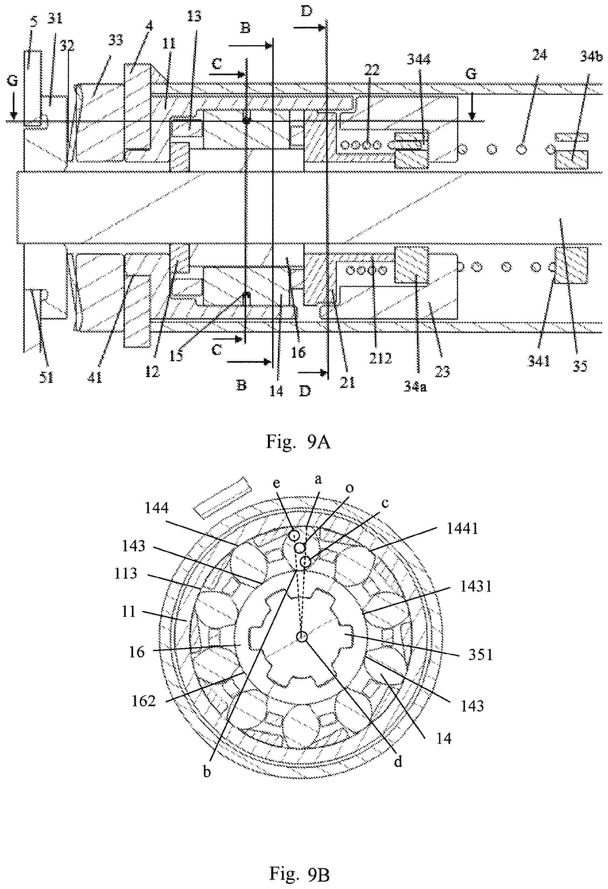

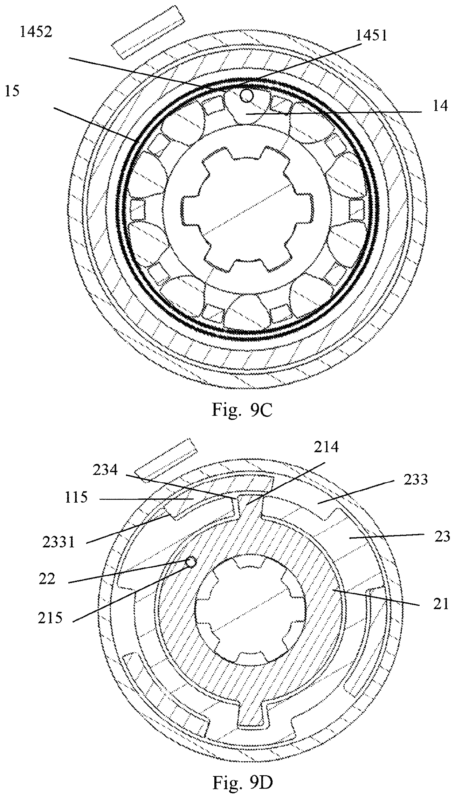

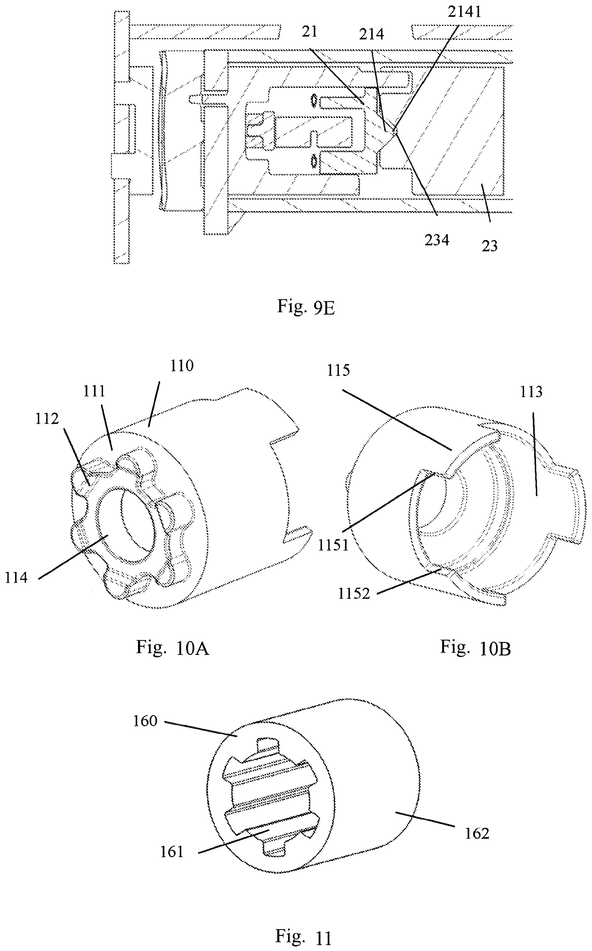

FIGs. 9A-9E are cross-sectional schematic views of a vehicle interior component having the one-way bearing assembly according to the present invention with an armrest of the vehicle interior component in the position shown in FIG. 2J, wherein FIG. 9A is an axial cross-sectional schematic view of the vehicle interior component at the rotating shaft with the armrest of the vehicle interior component in the position shown in FIG. 2J, FIG. 9B is a cross-sectional schematic view of the position of the sprag (the position corresponding to the section of line B-B in FIG. 5A) with the armrest of the vehicle interior component in the position shown in FIG. 2J, FIG. 9C is a cross-sectional schematic view of the position of the spring ring (the position corresponding to the section of line C-C in FIG. 5A) with the armrest of the vehicle interior component in the position shown in FIG. 2J, FIG. 9D is a cross-sectional schematic view of the position of the clutch wheel (the position corresponding to the section of line D-D in FIG. 5A) with the armrest of the vehicle interior component in the position shown in FIG. 2J, and FIG. 9E is a cross-sectional schematic view of the vehicle interior component at a position parallel to the rotating shaft and passing through the spring ring (the position corresponding to the section of line E-E in FIG. 5A) with the armrest of the vehicle interior component in the position shown in FIG. 2J;
FIGs. 10A and 10B are schematic views of the structure of the outer ring in FIG. 3C;
FIG. 11 is a schematic view of the structure of the inner ring in FIG. 3C;
FIG. 12 is a schematic view of the structure of the cage in FIG. 3C;
FIGs. 13A-13B are schematic views of the structure of the brake sprag in FIG. 3C;
FIG. 14 is a schematic view of the structure of the first positioning ring in FIG. 3C;
FIGs. 15A and 15B are schematic views of the structure of the locking ring in FIG. 3C;
FIG. 16 is a schematic view of the structure of the clutch wheel in FIG. 3C;
FIG. 17 is a schematic view of the structure of the sleeve in FIG. 3C;
FIG. 18 is a schematic view of the structure of the friction damping ring in FIG. 3C;
FIG. 19 is a schematic view of the structure of the axial positioning ring in FIG. 3C;
FIG. 20 is a schematic view of the structure of the spline shaft in FIG. 3C;
FIG. 21 is a schematic view of the structure of the positioning friction damping ring in FIG. 3C;
FIG. 22 is a schematic view of mounting structures of the cage, the brake sprag and the inner ring of the one-way bearing assembly according to Embodiment 2 of the present invention;
FIG. 23 is an exploded view of the structure of FIG. 22;
FIG. 24 is a schematic view of mounting partial structure of the one-way bearing assembly according to Embodiment 3 of the present invention;
FIG. 25 is an exploded view of the structure of FIG. 24;

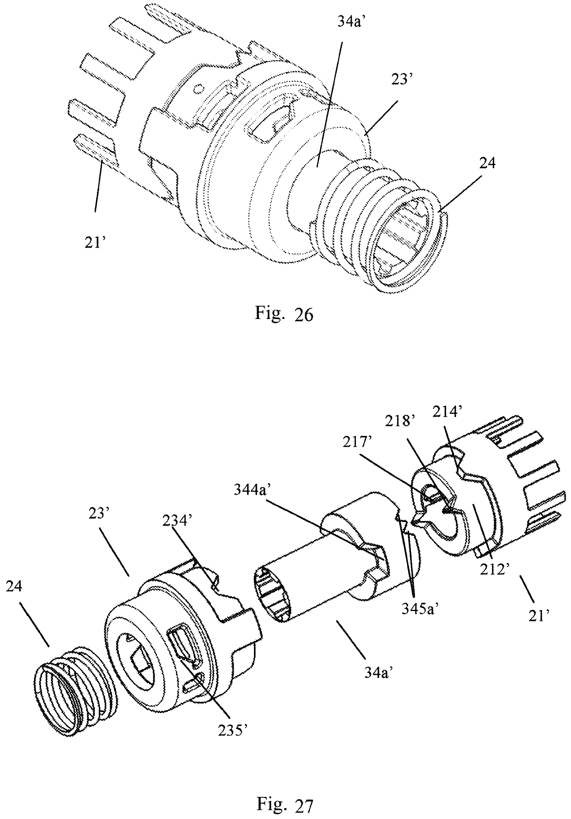

FIG. 26 is a schematic view of mounting partial structure of the one-way bearing assembly according to Embodiment 4 of the present invention;
FIG. 27 is an exploded schematic view of the structure of FIG. 26;
FIG. 28 is a schematic view of the closed position of the lifting cup holder/storage box comprising the one-way bearing assembly according to Embodiment 2 of the present invention; and
FIG. 29 is a schematic view of the use position of the lifting cup holder/storage box in FIG. 28.

### DETAILED DESCRIPTION

The preferred embodiments of the present invention are provided in conjunction with reference to the drawings and will be described in detail below.

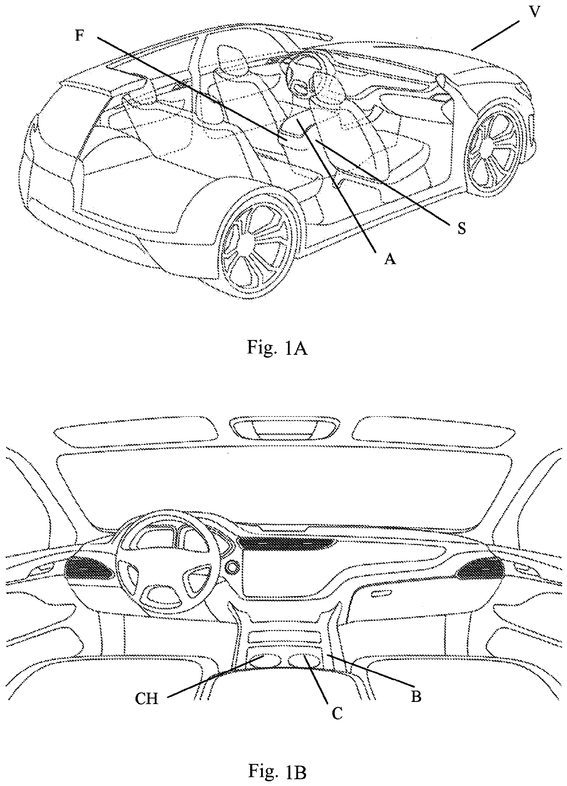

FIG. 1A is an interior schematic perspective view of a vehicle comprising the one-way bearing assembly according to the present invention, and FIG. 1B is an interior schematic perspective view of the vehicle in FIG. 1A viewed from another angle. According to an exemplary embodiment, the vehicle V comprises an interior I having an armrest box F and a lifting cup holder CH, the armrest box F comprises a storage box body S and an armrest A, wherein the storage box body S comprises a storage compartment (not shown). The storage box body S and the armrest A may be connected by a rotating shaft mechanism having the one-way bearing assembly according to a preferred embodiment of the present invention such that the armrest A may rotate relative to the storage box body S, such that the armrest A rotates between a closed position covering the storage compartment of the storage box body S and a maximum open position exposing the storage compartment of the storage box body S. The lifting cup holder CH comprises a base B having an opening (not visible) and a cover C for covering the opening, the cover C can also be connected with the base B by a sliding rail mechanism having the one-way bearing assembly according to another preferred embodiment of the present invention, so that the cover C can slide relative to the base B and can be controlled by a switch (not shown) disposed on the base B to slide between the closed position covering the opening and a use position for exposing the opening so as to receive a beverage container. It will be appreciated that the rotating shaft mechanism and/or the sliding rail mechanism having the one-way bearing assembly may also be disposed on the seat armrest or other parts with rotation or sliding functions.

### Embodiment 1: rotating shaft mechanism

A rotating shaft mechanism having the one-way bearing assembly according to a preferred embodiment of the present invention will be described below.

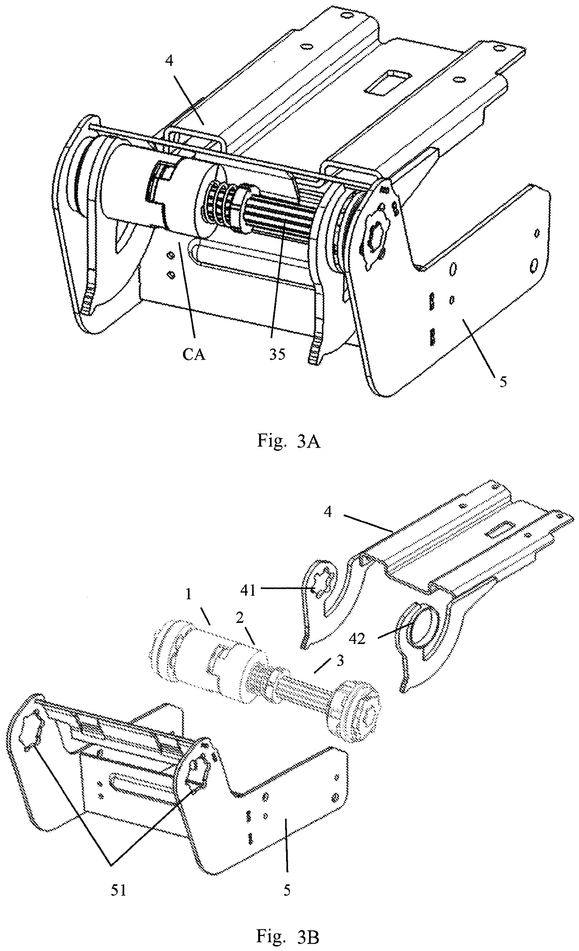

FIG. 3A is a schematic view of a rotating shaft mechanism having the one-way bearing assembly according to a preferred embodiment of the present invention. According to an exemplary embodiment, the rotating shaft mechanism having the one-way bearing assembly CA comprises: a fixed bracket 5 connected with the storage box body S shown in FIG. 1A, and a rotating bracket 4 connected with the armrest A shown in FIG. 1A by a rotating shaft and rotating between an initial position (corresponding to the closed position where the armrest A covers the storage compartment as shown in FIGs. 2A and 2J) and a maximum rotation angle position (corresponding to the maximum open position where the armrest A exposes the console compartment as shown in FIGs. 2G and 2H) relative to the fixed bracket 5. The rotating shaft is disposed as a spline shaft 35 in present embodiment. The one-way bearing assembly CA is fixed to the spline shaft 35 for achieving that the rotating bracket 4 is allowed to rotate toward the initial position at any intermediate position between the initial position and the maximum rotation angle position, and that the rotating bracket 4 is restricted from rotating toward the initial position at any intermediate position between the initial position and the maximum rotation angle position.

FIG. 3B is an exploded view of the rotating shaft mechanism shown in FIG. 3A. According to an exemplary embodiment, the rotating bracket 4 is provided with a splined hole 41 at one axial end and a round hole 42 at the other axial end, and the fixed bracket 5 is provided with splined holes 51 at each axial end.

FIG. 3C is an exploded view of the rotating shaft mechanism in FIG. 3B with the fixed bracket 5 and the rotating bracket 4 removed, showing an exploded structure of the one-way bearing CA. According to an exemplary embodiment, the one-way bearing assembly CA comprises: an outer ring 11 and an inner ring 16 coaxially disposed (i.e., axially aligned), and a cage 13, a brake sprag 14 and a spring ring 15 interposed between the outer ring 11 and the inner ring 16, and the outer ring 11, the cage 13, the brake sprag 14, the spring ring 15 and the inner ring 16 together form a bearing body 1. The spring ring 15 is configured for mounting the brake sprag 14 to the cage 13, a side of the brake sprag 14 radially facing the inside of the cage 13 is the radially inward side of the brake sprag 14; on the contrary, the brake sprag 14 radially facing the outside of the cage 13 is the radially outward side of the brake sprag 14.

The outer ring 11, as shown in FIGs. 10A and 10B, comprises a hollow cylinder 110 with one end closed for receiving the cage 13, the brake sprag 14, the spring ring 15 and the inner ring 16, and a closed end 111 of the hollow cylinder 110 is provided with splines 112. The center of the closed end 111 also has a round hole 114 extending through the splines 112 for sleeving the spline shaft 35 to ensure that the outer ring 11 can rotate around the spline shaft 35. The inner wall surface 113 of the hollow cylinder 110 is disposed eccentrically tangent to the brake sprag 14. The open end surface of the hollow cylinder 110, which is far away from the closed end 111, is provided with stroke control ribs 115 extending outward along the axial direction of the hollow cylinder 110. The stroke control ribs 115 are distributed at intervals in a circular array, the number of the stroke control ribs is set based on the preset unlocking position of the rotating bracket 4, and the larger the angle of the unlocking position relative to the initial position is, the smaller the number of the stroke control ribs 115 is. The number of the stroke control ribs 115 is preferably 3 in present embodiment. The unlocking position means that the rotating bracket 4 can be rotated from the unlocking position to the initial position when the rotating bracket 4 rotates to the unlocking position, and the rotating bracket 4 cannot be rotated to the initial position when being at any position between the initial position and the unlocking position.

As shown in FIG. 11, the inner ring 16 is a hollow cylinder 160, the center of the hollow cylinder 160 is provided with spline grooves 161 extending therethrough, and the spline grooves 161 match with the spline shaft 35 to ensure that the inner ring 16 and the spline shaft 35 are relatively stationary; the outer wall surface 162 of the hollow cylinder 160 is disposed eccentrically tangent to the brake sprag 14.

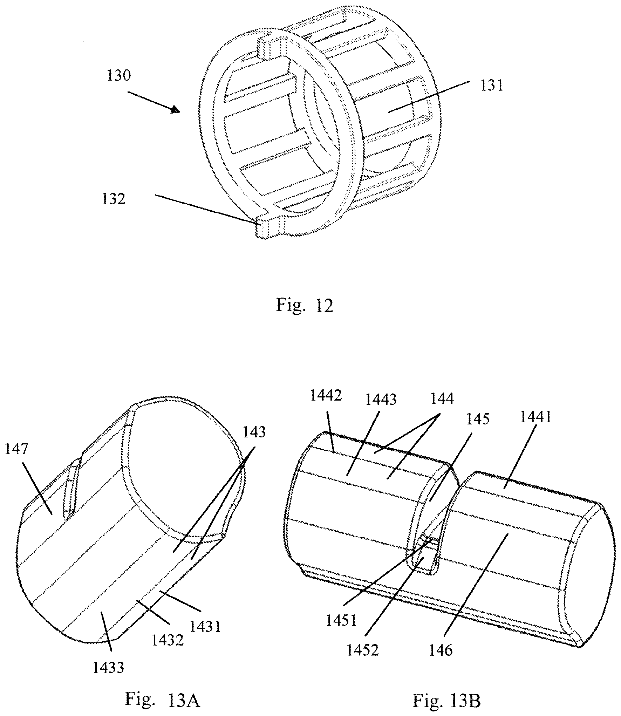

The cage 13 is, as shown in FIGs. 12A and 12B, a substantially hollow cylinder 130, and the circumferential wall of the hollow cylinder 130 is equally provided with a plurality of openings 131 for receiving the brake sprags 14. One end surface of the cage 13 is provided with positioning ribs 132 protruding outward in the axial direction, and the number of the positioning ribs 132 may be set to 1 or more.

As shown in FIGs. 13A and 13B, a plurality of the brake sprags 14 are disposed in a circular array uniformly and rotationally symmetrically. The brake sprag 14 comprises an inner arc surface 143 on a radially inward side and an outer arc surface 144 on a radially outward side. The inner arc surface 143 comprises a third arc surface 1431 and a fourth arc surface 1433 (or the third and fourth spiral surfaces, or the third arc surface and the fourth spiral surface) which are not concentric and have different radii, and the third arc surface 1431 and the fourth arc surface 1433 are adjacent to each other to form an intersecting line 1432. The outer arc surface 144 comprises a first arc surface 1441 and a second arc surface 1443 (or the first and second spiral surfaces, or the first arc surface and the fourth spiral surface) which have different radii, and the first arc surface 1441 and the second arc surface 1443 are adjacent to each other to form an intersecting line 1442. The radii of the first arc surface 1441 and the third arc surface 1431 are each larger than half of a difference between the radius of the inner wall surface 113 of the outer ring 11 and the radius of the outer wall surface 162 of the inner ring 16, which is a basic concept of the conventional one-way bearing. However, the second arc surface 1443 and the fourth arc surface 1433 are creatively added to the one-way bearing assembly of the present invention, and the radii of the second arc surface 1443 and the fourth arc surface 1433 are both smaller than half of a difference between the radius of the inner wall surface 113 of the outer ring 11 and the radius of the outer wall surface 162 of the inner ring 16, so when the one-way bearing mechanism is unlocked, the gaps between the outer arc surface 144 and the inner arc surface 143 and the inner wall surface 113 of the outer ring 11 and/or the outer wall surface 162 of the inner ring 16 are sufficiently large, which ensures smoother unlocking function and more acute switch function in unlocking and locking states compared with a single arc surface or a spiral arc surface used in a conventional sprag.

The brake sprag 14 also comprises a countersunk groove 145 with an opening facing radially outward for receiving the spring ring 15 to ensure that each brake sprag 14 is retained by the spring ring 15 on the cage 13. The groove bottom of the countersunk groove 145 comprises a fifth arc surface 1451 and a sixth arc surface 1452 which are not concentric and have different radii, and since the fifth arc surface 1451 is an eccentric arc surface, the pressure of the spring ring 15 on the fifth arc surface 1451 of the brake sprag 14 causes the brake sprag 14 to generate a self-rotating torque which ensures that when the one-way bearing assembly CA is in a locking state, the inner arc surface 143 of the brake sprag 14 is eccentrically tangent to the outer wall surface 162 of the inner ring 16, and the tangent position is on the third arc surface 1431 or coincides with the intersection line 1432; meanwhile, the outer arc surface 144 of the brake sprag 14 is eccentrically tangent to the inner wall surface 113 of the outer ring 11 at a position on the first arc surface 1441 or coincident with the intersecting line 1442. The brake sprag 14 has an unlocking surface 146 and a stop surface 147 located radially inward of the brake sprag 14, and the stop surface 147 is disposed opposite the unlocking surface 146.

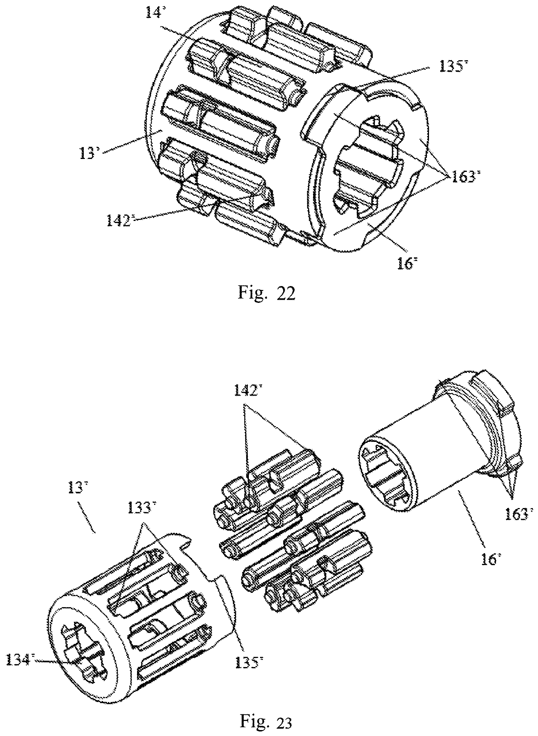

The brake sprag, the cage, the positioning ring and the inner ring can also be designed in other forms in order to improve structural performance. As shown in FIGs. 22 and 23, it is conceivable that the brake sprag 14' may comprise an axially disposed fixed shaft 142', and the brake sprag 14' is connected with the shaft hole 133' disposed on the cage 13' by the fixed shaft 142', such that the brake sprag 14' can be more stably deflected relative to the cage 13' and the locking of the inner ring 16 is more stable. It is also conceivable that a first positioning ring 12 may be integrated with the cage 13', and the integrated cage 13' may be formed by removing the positioning ribs 132 of the cage 13 and adding the spline hole 134' matching with the spline shaft 35 at one axial end to fix the cage 13' to the spline shaft 35, as compared with the cage 13. It is also conceivable to provide a stop groove 135' at the other axial end of the cage 13' in order to further stabilize the cage 13' and add a stop rib 163' matching with the stop groove 135' on the inner ring 16' to ensure that the cage 13', the spline shaft 35 and the inner ring 16' remain relatively stationary.

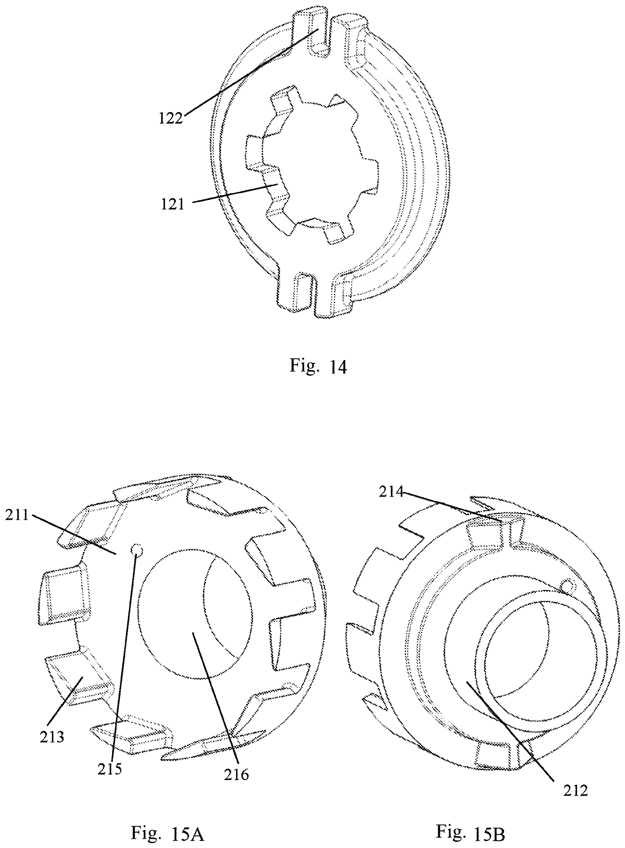

As shown in FIG. 3C, the one-way bearing assembly CA further comprises the first positioning ring 12 received in the outer ring 11; as shown in FIG. 14, the first positioning ring 12 comprises spline holes 121 matching with the splined shaft 35 to ensure that the first positioning ring 12 is fixed relative to the spline shaft 35. The first positioning ring 12 further comprises a positioning groove 122 matching with the positioning ribs 132 of the cage 13 to ensure that the cage 13 is fixed relative to the first positioning ring 12, i.e., the cage 13 is also fixed relative to the spline shaft 35.

As shown in FIG. 3C, the one-way bearing assembly CA further comprises an unlocking mechanism 2, and according to one embodiment of the present invention, the unlocking mechanism 2 comprises an unlocking ring 21, a torsion spring 22, a clutch wheel 23 and a helical compression spring 24.

The unlocking ring 21, as shown in FIGs. 15A and 15B, comprises a hollow main cylinder 211 and a secondary cylinder 212 axially connected to each other, wherein the diameter of the main cylinder 211 is greater than that of the secondary cylinder 212. The circumferential wall of the main cylinder 211 comprises a plurality of spaced-apart unlocking ribs 213 extending axially outwardly along the main cylinder 211. The unlocking rib 213 is a columnar structure with a flat triangle-shaped cross section, wherein an edge corresponding to the minimum angle of the flat triangle-shaped cross section is an unlocking edge 2131, and the unlocking edge 2131 matches with the unlocking surface 146 of the brake sprag 14 to realize unlocking. The end surface of the main cylinder 211 facing the secondary cylinder 212 is provided with trapezoidal ribs 214 and a mounting hole 215 for fixing one end of the torsion spring 22. The center of the unlocking ring 21 is further provided with a round hole 216 penetrating through the main cylinder 211 and the secondary cylinder 212 for receiving the spline shaft 35 to ensure that the unlocking ring 21 can rotate around the spline shaft 35.

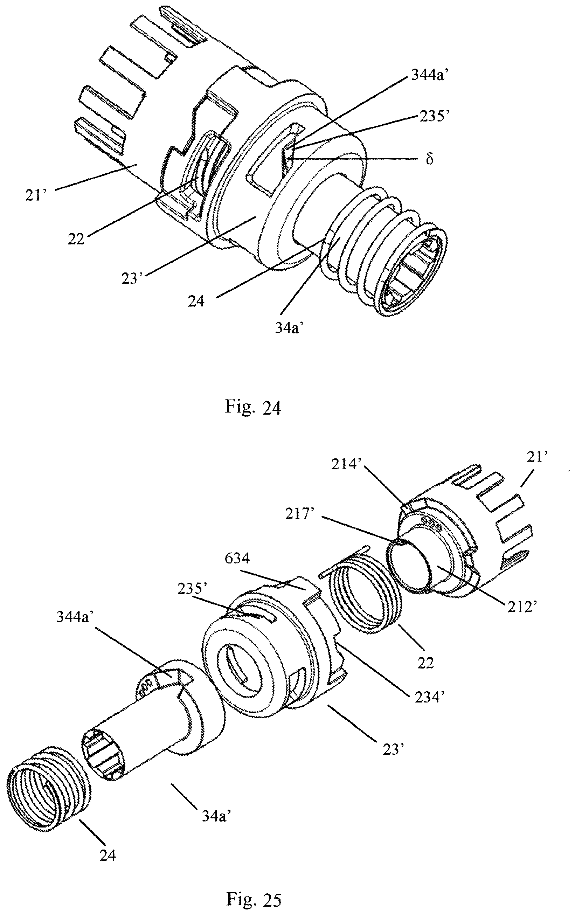

In order to accurately control the unlocking rotation angle of the unlocking ring during the unlocking process of the mechanism, the unlocking ring 21 can also be designed into an unlocking ring 21'. As shown in FIGs. 24 and 25, the structures of the two unlocking ring are substantially the same, except that the unlocking ring 21' has a stop rib 217' in its secondary cylinder 212', which matches with any one of the spline grooves (not shown) on the spline shaft 35 for precisely controlling the unlocking rotation angle of the unlocking ring 21' around the spline shaft 35. The rotation angle of the unlocking ring 21' is controlled by the self-rotation angle of the brake sprag, and the unlocking rotation angle of the unlocking ring 21' is more accurate by adding the stop rib 217'.

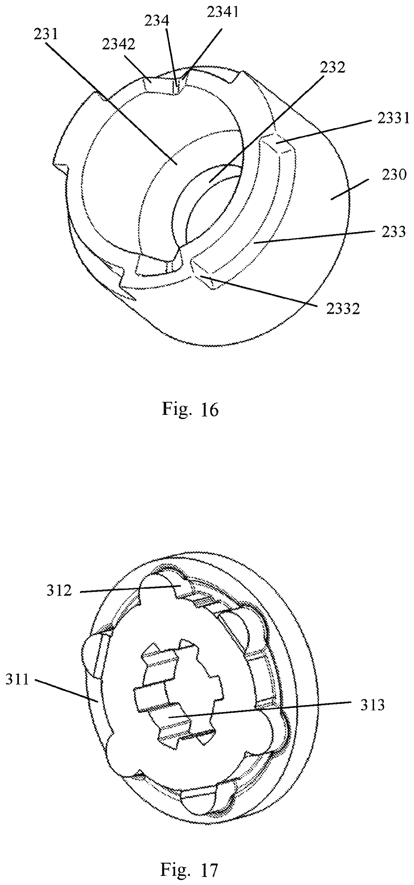

As shown in FIG. 16, the clutch wheel 23 is configured as a hollow cylinder 230 capable of receiving the secondary cylinder 212 of the unlocking ring 21 and the torsion spring 22, one end of the hollow cylinder 230 is closed, and the outer end surface of the closed end 231 abuts against the helical compression spring 24, so that the clutch wheel 23 is always pressed by the helical compression spring 24; the center of the closed end 231 is provided with a round hole 232 for sleeving the spline shaft 35 to ensure that the unlocking ring 21 can rotate around the spline shaft 35. A plurality of stroke control slots 233 corresponding to the stroke control ribs 115 of the outer ring 11 are disposed on the cylindrical wall of the hollow cylinder 230 close to the other end, the radial width of the stroke control slots 233 is smaller than the wall thickness of the hollow cylinder 230, and the stroke control ribs 115 can move reciprocally in the stroke control slots 233, so that the outer ring 11 pushes the clutch wheel 23 to rotate in different directions; meanwhile, a plurality of trapezoidal grooves 234 which are matching with the trapezoidal ribs 214 of the unlocking ring 21 with clearance are also disposed on the end surface of the hollow cylinder 230 adjacent to the stroke control slots 233, so that the clutch wheel 23 and the unlocking ring 21 move synchronously.

In order to avoid that the friction force between the clutch wheel 23 and the unlocking ring 21 is too large due to too large pressure of the helical compression spring 24, and the one-way bearing assembly is accidentally locking in the movement process after the mechanism is unlocking to cause the mechanism to be out of work and not close the armrest, the clutch wheel 23 can also be designed into a clutch wheel 23'. As shown in FIGs. 24 and 25, the trapezoidal grooves 234' of the clutch wheel 23' match with the trapezoidal ribs 214' of the unlocking ring 21' without clearance. In order to avoid a situation where the clutch wheel 23 does not be in contact with the unlocking ring 21 after the mechanism is unlocked, the positioning ring 34a may be designed into a clutch positioning ring 34a', and the clutch positioning ring 34a' comprises trapezoidal grooves 344a'. The clutch wheel 23' further comprises trapezoidal ribs 235' matching with the trapezoidal grooves 344a', and the trapezoidal grooves 344a' and the trapezoidal ribs 235' have a gap δ corresponding to the unlocking rotation angle of the unlocking ring 21' when the rotating bracket is in the initial state. It should be noted that the axial travel of the trapezoidal rib 235' from the trapezoidal groove 344a' is greater than the axial travel of the trapezoidal rib 214' of the unlocking ring 21' from the trapezoidal groove 234' of the clutch wheel 23'.

As shown in FIG. 3C, the rotating shaft mechanism further comprises a sleeve 31 sleeved on the spline shaft 35, a disc spring 32, a friction damping ring 33, an axial positioning ring 34 and a positioning friction damping ring 36. The shaft sleeve 31, the disc spring 32, the friction damping ring 33, the axial positioning ring 34, the spline shaft 35 and the positioning friction damping ring 36 jointly form the rotating shaft assembly 3.

As shown in FIG. 17, the shaft sleeve 31 comprises a base 311, splines 312 provided on one side end surface of the base 311, and spline holes 313 matching with the spline shaft 35. As shown in FIG. 3C, a pair of shaft sleeves 31 are sleeved at two ends of the spline shaft 35, respectively, and received between the two spline holes 51 on the fixed bracket 5 in the present embodiment, wherein the splines 312 (see FIG. 4A) of the shaft sleeves 31 match with the two spline holes 51, respectively, so that the shaft sleeves 31 are stationary relative to the fixing bracket 5, and the spline holes 313 of the shaft sleeves 31 fix the shaft sleeves 31 relative to the spline shaft 35, and thus fix the shaft sleeves relative to the fixed bracket 5.

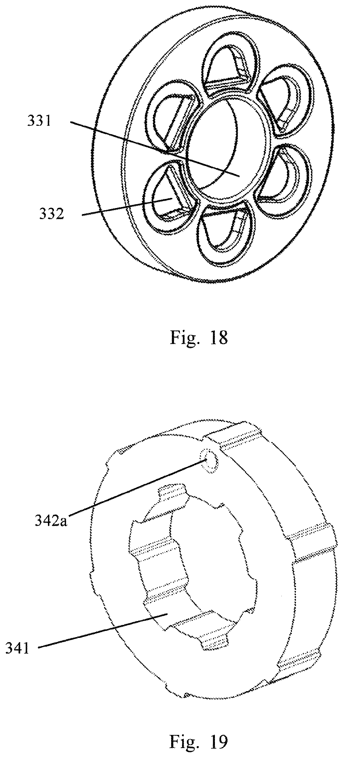

As shown in FIG. 18, the friction damping ring 33 comprises an inner round hole 331 matching with the spline shaft 35, enabling the friction damping ring 33 to rotate around the spline shaft 35. The friction damping ring 33 further comprises grooves 332 matching with the splines 112 (see FIG. 4A) of the outer ring 11, so that the friction damping ring 33 rotates synchronously with the outer ring 11.

As shown in FIG. 3C, three axial positioning rings 34 comprises a first axial positioning ring 34a received within the clutch wheel 23, and a second axial positioning ring 34b and a third axial positioning ring 34c disposed between the helical compression spring 24 and the positioning friction damping ring 36. The three axial positioning rings are substantially the same in structure except that the first axial positioning ring 34a is further provided with a through hole 342a (see FIG. 19) for fixing the other end of the torsion spring 22, and comprise spline grooves 341 matching with the spline shaft 35, and the spline grooves 341 of the three axial positioning rings 34 can be engaged with ratchet teeth 351, 352 and 353 (see FIG. 20) of the spline shaft 35 to restrict the three axial positioning rings 34 from moving along the axial direction.

In order to avoid the failure problem caused by the torque applied to the clutch wheel 23 by the torsion spring 22 exceeding the friction between the unlocking ring 21 and the clutch wheel 23, the unlocking mechanism 2 may remove the torsion spring 22, as shown in FIGs. 24-25, and instead, may adopt the unlocking ring 21', add ratchet teeth 218' to the end surface of the secondary cylinder 212' of the unlocking ring 21', and add two ratchet grooves 345a' to the corresponding end surface of the clutch positioning ring 34a'. The ratchet teeth 218' match with the ratchet grooves 345a', and the rotation angle of the ratchet teeth 218' in the two ratchet grooves 345a' corresponds to the unlocking rotation angle of the unlocking ring 21'.

The positioning friction damping ring 36, as shown in FIG. 21, comprises an inner round hole 361 matching with the spline shaft 35, enabling the positioning friction damping ring 36 to rotate around the spline shaft 35. A plurality of axial positioning ribs 362 and a plurality of radial positioning ribs 363 are alternately and equally disposed on the outer annular surface of the positioning friction damping ring 36, wherein the radial positioning ribs 363 pass through the round hole 42 of the rotating bracket 4 and are mutually extruded and match with the round hole 42, and the axial positioning ribs 362 abut against the rotating bracket 4 on the periphery of the round hole 42, so that the positioning friction damping ring 36 and the rotating bracket 4 synchronously rotate.

FIG. 4A is a partial axial cross-sectional schematic view of the rotating shaft mechanism in FIG. 3A at a rotating shaft position. The spline shaft 35 extends through the rotating bracket 4, the fixed bracket 5 and the one-way bearing assembly CA, as well as the shaft sleeve 31, the disc spring 32, the frictional damping ring 33, the axial positioning ring 34 (34a and 34b visible) and the positioning frictional damping ring 36 (not visible). Specifically, the sleeve 31, the disc spring 32 and the frictional damping ring 33 are sequentially disposed between the spline hole 51 and the spline hole 41 on the same side as the fixed bracket 5 and the rotating bracket 4. The positioning friction damping ring 36 and another sleeve 31 (omitted) are sequentially disposed between the spline hole 51 and the round hole 42 on the other side of the fixed bracket 5 and the rotating bracket 4. The two sleeves 31 are fixed to the fixed bracket 5. The friction damping ring 33 abuts against the rotating bracket 4, so that the grooves 332 on the friction damping ring 33 match with the splines 112 on the outer ring 11 passing through the spline hole 41 of the rotating bracket 4, and the synchronous movement of the outer ring 11, the friction damping ring 33 and the rotating bracket 4 is realized. The stroke control ribs 115 of the outer ring 11 match with the stroke control slots 233 of the clutch wheel 23, so that the outer ring 11 and the clutch wheel 23 form a closed cylinder, and the interior of the closed cylinder comprises the following parts sequentially sleeved on the spline shaft 35: the first positioning ring 12, the inner ring 16, the cage 13 sleeved outside the inner ring 16, a plurality of brake sprags 14 disposed at an opening 131 of the cage 13 by the spring ring 15, the unlocking ring 21, the torsion spring 22 sleeved on the secondary cylinder 212 of the unlocking ring 21, and the helical compression spring 24. The first positioning ring 12, the inner ring 16, the unlocking ring 21 and the first axial positioning ring 34a sequentially abut against each other for avoiding axial movement in the outer ring 11 and the clutch wheel 23. The helical compression spring 24 is sleeved on the spline shaft 35, and has one end abutting against the clutch wheel 23 and the other end abutting against the second axial positioning ring 34b, thereby restricting the axial movement of the clutch wheel 23. The positioning friction damping ring 36 passes through the round hole 42 of the rotating bracket 4 and then abuts against the third axial positioning ring 34c, the axial positioning ribs 362 on the positioning friction damping ring 36 abut against the rotating bracket 4 on the periphery of the round hole 42 to restrict the axial movement of the positioning friction damping ring 36, and meanwhile, the radial positioning ribs 363 on the positioning friction damping ring 36 are mutually extruded and matched with the round hole 42, so that the positioning friction damping ring 36 and the rotating bracket 4 synchronously rotate.

### Overturning armrest box having the rotating shaft mechanism

The use of the overturning armrest box F having the rotating shaft mechanism 100 will be described below. Unlike conventional vehicle interior components that require actuation by a latch to switch the armrest between the unlocking and locking states, the overturning armrest box F is configured such that the armrest A is allowed to move from the closed position shown in FIG. 2A to the load-bearing position shown in FIGs. 2B, 2C and 2D without a latch.

### (Armrest is in closed position as shown in FIG. 2A.)

As shown in FIG. 2A, the armrest A is in a closed position shielding the storage compartment relative to the armrest box body S, i.e., the rotating bracket 4 is in the initial position relative to the fixed bracket 5. FIGs. 4A-4E are cross-sectional schematic views of a vehicle interior component having the one-way bearing assembly according to the present invention with the armrest of the vehicle interior component in the position shown in FIG. 2A, wherein FIG. 4A is an axial cross-sectional schematic view of the vehicle interior component at the rotating shaft with the armrest of the vehicle interior component in the position shown in FIG. 2A, FIG. 4B is a cross-sectional schematic view taken along line B-B of FIG. 4A with the armrest of the vehicle interior component in the position shown in FIG. 2A, showing the positional relationship of the brake sprag with the inner and outer rings, FIG. 4C is a cross-sectional schematic view taken along line C-C of FIG. 4A with the armrest of the vehicle interior component in the position shown in FIG. 2A, showing the positional relationship of the brake sprag and spring ring, FIG. 4D is a cross-sectional schematic view taken along line D-D of FIG. 4A with the armrest of the vehicle interior component in the position shown in FIG. 2A, showing that stroke control ribs are in contact with the start end surfaces of stroke control slots and a unlocking ring is in contact with the start end surface of a trapezoidal groove, and FIG. 4E is a cross-sectional schematic view taken along line E-E of FIG. 4A with the armrest of the vehicle interior component in the position shown in FIG. 2A.

In this case, the inner ring 16 is fixed relative to the spline shaft 35, which is functioned as a fixed ring. The pressure of the spring ring 15 on the fifth arc surface 1451 of the brake sprag 14 causes the brake sprag 14 to generate counterclockwise torque (as shown in FIG. 4C) that causes the outer arc surface 144 of the brake sprag 14 to be eccentrically tangent to the inner wall surface 113 of the outer ring 11 to form a tangent point a, and the inner arc surface 143 of the brake sprag 14 to be eccentrically tangent to the outer wall surface 162 of the inner ring 16 to form a tangent point b, however, a line connecting the tangent point a to the center point c of the first arc surface 1441 on the outer arc surface 144 and the center point d of the inner wall surface 113 of the outer ring 11 does not pass through the self-rotation center o of the brake sprag 14, and a line connecting the tangent point b to the center point e of the third arc surface 1431 on the inner arc surface 143 and the center point of the outer wall surface 162 of the inner ring 16 (i.e., the center point d of the inner wall surface 113 of the outer ring 11) does not pass through the self-rotation center o of the brake sprag 14, as shown in FIG. 4B, so that the tangent point a, the tangent point b and the center point e form a self-locking angle between the brake sprag 14 and the inner ring 16, while the tangent point a, the tangent point b and the center point c form a self-locking angle between the brake sprag 14 and the outer ring 11. When the outer ring 11 rotates clockwise, the outer ring 11 is in tangential contact with the brake sprag 14, and the brake sprag 14 is driven by the outer ring 11 to rotate clockwise around the self-rotation center o of the brake sprag 14, so that the outer ring 11 is not prevented from rotating clockwise. Conversely, when the outer ring 11 rotates counterclockwise, the outer ring 11 is prevented from rotating counterclockwise by the brake sprag 14.

Also in this case, as shown in FIG. 4D, one end of the torsion spring 22 is connected with the mounting hole 215 of the unlocking ring 21, as shown in FIG. 4A, so that the torsion spring 22 applies a clockwise torque to the unlocking ring 21, which causes the trapezoidal ribs 214 of the unlocking ring 21 inserted into the trapezoidal grooves 234 of the clutch wheel 23 to be always in contact with the clockwise start end surfaces 2341 (as shown in FIG. 16) of the trapezoidal grooves 234, however, at the same time, the stroke control ribs 115 of the outer ring 11 are in contact with the clockwise start end surfaces 2331 (as shown in FIG. 16) of the stroke control slots 233 of the clutch wheel 23, which offsets the torque applied to the unlocking ring 21 by the torsion spring 22, and the unlocking ring 21 and the clutch wheel 23 are kept stationary, thereby ensuring that the unlocking edges 2131 of the unlocking ribs 213 and the unlocking surface 146 of the brake sprag 14 are only in contact with each other and do not interact with each other. In this case, as shown in FIG. 4E, the trapezoidal rib 214 of the unlocking ring 21 and the trapezoidal groove 234 of the clutch wheel 23 match with each other so that both rotate together.

In summary, when the rotating bracket 4 is at the initial position relative to the fixed bracket 5, the unlocking ring 21 is not activated, the outer ring 11 can only rotate clockwise but not counterclockwise, and the outer ring 11 is in a one-way locking state.

(The armrest rotates from the closed position shown in FIG. 2A to the unlocking position shown in FIGs. 2E and 2F by sequentially passing through at least one intermediate position and the load-bearing position shown in FIGs. 2B, 2C and 2D.)

When the armrest A rotates from the closed position shown in FIG. 2A to the unlocking position shown in FIGs. 2E and 2F, the armrest A moves through a load-bearing position shown in FIGs. 2B, 2C and 2D and at least one intermediate position between the closed position and the load-bearing position, the rotating bracket 4 connected with the armrest A drives the outer ring 11 of the one-way bearing assembly to rotate clockwise around the rotating shaft together with the armrest, and the outer ring 11 is functioned as a rotating ring. FIGs. 5A-5E are cross-sectional schematic views of a vehicle interior component having the one-way bearing assembly according to the present invention with the armrest of the vehicle interior component in the position shown in FIGs. 2C and 2D. FIG. 5A is an axial cross-sectional schematic view of the vehicle interior component at the rotating shaft with the armrest of the vehicle interior component in the position shown in FIGs. 2C and 2D, FIG. 5B is a cross-sectional schematic view taken along line B-B of FIG. 5A with the armrest of the vehicle interior component in the position shown in FIGs. 2C and 2D, FIG. 5C is a cross-sectional schematic view taken along line C-C of FIG. 5A with the armrest of the vehicle interior component in the position shown in FIGs. 2C and 2D, FIG. 5D is a cross-sectional schematic view taken along line D-D of FIG. 5A with the armrest of the vehicle interior component in the position shown in FIGs. 2C and 2D, and FIG. 5E is a cross-sectional schematic view taken along line E-E of FIG. 5A with the armrest of the vehicle interior component in the position shown in FIGs. 2C and 2D. FIGs. 5A-5C are the same as FIGs. 4A-4C above, and illustrate that the positional relationship of the respective parts in the axial cross section of the position of the rotating shaft and the cross sections of line B-B and line C-C of FIGs. 4A and 5A are not changed.

When the stroke control ribs 115 on the outer ring 11 contact the clockwise end surfaces 2332 (shown in FIG. 16) of the stroke control slots 233 on the clutch wheel 23, the force exerted on the clutch wheel 23 by the helical compression spring 24 presses the unlocking ring 21 to offset the torque exerted on the unlocking ring 21 by the torsion spring 22, and the unlocking ring 21 and the clutch wheel 23 are kept stationary, as shown in FIG. 5D. In this case, as shown in FIG. 5E, the trapezoidal rib 214 of the unlocking ring 21 and the trapezoidal groove 234 of the clutch wheel 23 match with each other so that both rotate together.

Further, as the outer ring 11 continues to rotate clockwise, the outer ring 11 starts to push the clutch wheel 23 to rotate clockwise together until the clockwise end surface 2342 (shown in FIG. 16) in the trapezoidal groove 234 on the clutch wheel 23 comes into contact with the trapezoidal ribs 214 on the unlocking ring 21, and the unlocking ring 21 and the clutch wheel 23 are kept stationary.

In summary, in the process of moving the armrest A from the closed position to the load-bearing position shown in FIGs. 2B, 2C and 2D, the unlocking ring 21 is not activated, so that the armrest A in the locking state restricts the armrest A from moving towards the closed position, and the movement of the outer ring 11 is restricted, i.e., the outer ring 11 can only rotate in the clockwise direction but not in the counterclockwise direction, and the outer ring 11 is in the one-way locking state, so that the one-way bearing assembly mechanism is configured as follows: (a) to facilitate the movement of the armrest A from the closed position to the load-bearing position shown in FIGs. 2A-2B; (b) to keep the armrest A at the load-bearing position and restrict the armrest A from moving the load-bearing position to the closed position when the armrest moves from the closed position to the load-bearing position as shown in FIG. 2C; and (c) meanwhile, to keep the armrest A at the intermediate position and restrict the armrest from moving from the intermediate position to the closed position when the armrest moves from the closed position to at least one intermediate position between the closed position and the load-bearing position. The armrest A cannot return to the closed position, i.e., the armrest A can withstand the loading of the user. The load-bearing position is a raised position in this embodiment.

It should be noted that when the trapezoidal ribs 214 of the unlocking ring 21 move in the trapezoidal grooves 234 of the clutch wheel 23, a frictional force is generated between the unlocking ring 21 and the clutch wheel 23. When the torque applied to the clutch wheel 23 by the torsion spring 22 exceeds the friction force between the clutch wheel 23 and the unlocking ring 21, the trapezoidal grooves 234 of the clutch wheel 23 are disengaged from the trapezoidal ribs 214 of the unlocking ring 21 before the unlocking position, i.e., the unlocking state occurs in advance, and the mechanism fails. Therefore, the torsion spring 22 can be removed, the unlocking ring 21' as described above and shown in FIGs. 24-25 is used, and ratchet teeth 218' are added to the end surface of the secondary cylinder 212' of the unlocking ring 21' and two ratchet grooves 345a' are added to the corresponding end surface of the clutch positioning ring 34a'. Ratchet teeth 218' match with ratchet grooves 345a', thereby eliminating the failure of the mechanism while controlling the position of unlocking ring 21'.

### (The armrest rotates to the unlocking position as shown in FIGs. 2E and 2F.)

As shown in FIGs. 2E and 2F, when the armrest A continues to rotate to the unlocking position, i.e., the outer ring 11 drives the clutch wheel 23 to start pushing the unlocking ring 21 to rotate clockwise, FIGs. 6A-6E are cross-sectional schematic views of a vehicle interior component having the one-way bearing assembly according to the present invention with an armrest of the vehicle interior component in the position shown in FIGs. 2E and 2F, wherein FIG. 6A is an axial cross-sectional schematic view of the vehicle interior component at the rotating shaft with the armrest of the vehicle interior component in the position shown in FIGs. 2E and 2F, FIG. 6B is a cross-sectional schematic view of the position of the sprag with the armrest of the vehicle interior component in the position shown in FIGs. 2E and 2F, FIG. 6C is a cross-sectional schematic view of the position of the spring ring with the armrest of the vehicle interior component in the position shown in FIGs. 2E and 2F, FIG. 6D is a cross-sectional schematic view of the position of the clutch wheel with the armrest of the vehicle interior component in the position shown in FIGs. 2E and 2F, and FIG. 6E is a cross-sectional schematic view of the vehicle interior component at a position parallel to the rotating shaft and passing through the spring ring with the armrest of the vehicle interior component in the position shown in FIGs. 2E and 2F.

In this case, the unlocking rib 2131 of the unlocking ring 21 pushes the unlocking surface 146 of the brake sprag 14, so that the brake sprag 14 rotates clockwise around its own rotation center o until the stop surface 147 of the brake sprag 14 contacts the cage 13 and stops, as shown in FIG. 6B, a gap exists between the outer arc surface 144 of the brake sprag 14 and the inner wall surface 113 of the outer ring 11, and a gap also exists between the inner arc surface 143 of the brake sprag 14 and the outer wall surface 162 of the inner ring 16. In this case, the arc surface of the spring ring 15 contacting the brake sprag 14 has changed from the fifth arc surface 1451 to the sixth arc surface 1452 (as shown in FIG. 6C). Meanwhile, since the unlocking ring 21 cannot rotate any more after the stop surface 147 of the brake sprag 14 contacts the cage 13, as the clutch wheel 23 is continuously pushed by the outer ring 11 to rotate, the pressure of the helical compression spring 24 on the clutch wheel 23 is overcome, and the trapezoidal grooves 234 of the clutch wheel 23 are pushed by the trapezoidal ribs 214 of the unlocking ring 21 in the axial direction to axially translate the clutch wheel 23 (as shown in FIG. 6A), so that the trapezoidal ribs 214 of the unlocking ring 21 are disengaged from the trapezoidal grooves 234 of the clutch wheel 23, as shown in FIG. 6E. As shown in FIG. 6D, the unlocking ring 21 is disengaged, the outer ring 11 is unlocked, and the unlocking mechanism 2 brings the armrest A into the unlocking state. The process from the unlocking ring 21 pushing the brake sprag 14 to rotate around its own rotation center o to the trapezoidal ribs 214 of the unlocking ring 21 disengaging from the trapezoidal grooves 234 of the clutch wheel 23 is called an unlocking stroke. Thereafter, the outer ring 11 rotates counterclockwise again, because the clutch is unlocked, and is not restrained by the brake sprag 14 locking and the clutch wheel 23.

In summary, when the armrest A is at the unlocking position, the outer ring 11 can rotate clockwise and counterclockwise, that is, the outer ring 11 is in the unlocking state. Thus, the armrest A can be rotated to either the maximum open position or the closed position.

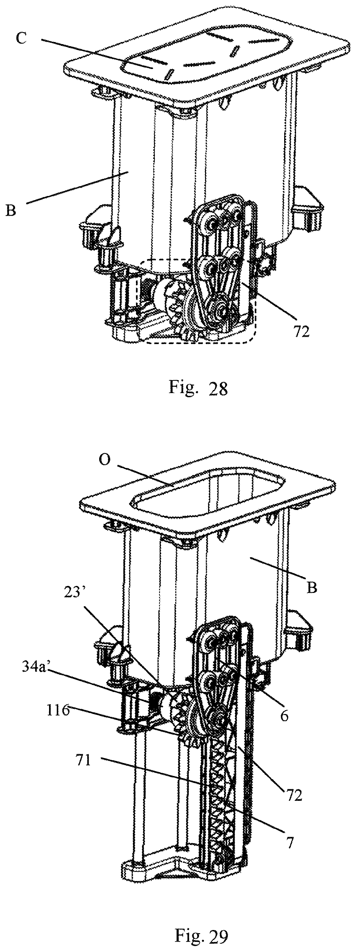

It should be noted that the top surfaces 2141 of the trapezoidal ribs 214 are still in contact with the clutch wheel 23 although the trapezoidal ribs 214 of the unlocking ring 21 are disengaged from the trapezoidal grooves 234 of the clutch wheel 23, as shown in FIG. 29, the pressure of the helical compression spring 24 on the clutch wheel 23, in addition to the rotation of the clutch wheel 23, may generate a friction force between the clutch wheel 23 and the unlocking ring 23, which may affect the rotation of the unlocking ring 21 against the torsion spring 22, and thus affecting the function of the mechanism. Therefore, the design of the unlocking ring 21', the clutch wheel 23' and the clutch positioning ring 34a' can be used, and since the axial stroke of the trapezoidal ribs 235' from the trapezoidal grooves 344a' is larger than that of the trapezoidal ribs 214' of the unlocking ring 21' from the trapezoidal grooves 234' of the clutch wheel 23', when the trapezoidal ribs 235' are disengaged from the trapezoidal grooves 344a', the trapezoidal ribs 214' are also completely disengaged from the trapezoidal grooves 234', and the top surfaces of the trapezoidal ribs 214' are not in contact with the clutch wheel 23', so that the failure condition caused by the friction force is eliminated.

### (The armrest rotates to the maximum open position as shown in FIGs. 2G and 2H.)

FIGs. 7A-7E are cross-sectional schematic views of a vehicle interior component having the one-way bearing assembly according to the present invention with an armrest of the vehicle interior component in the position shown in FIGs. 2G and 2H, wherein FIG. 7A is an axial cross-sectional schematic view of the vehicle interior component at the rotating shaft with the armrest of the vehicle interior component in the position shown in FIGs. 2G and 2H, FIG. 7B is a cross-sectional schematic view of the position of the sprag with the armrest of the vehicle interior component in the position shown in FIGs. 2G and 2H, FIG. 7C is a cross-sectional schematic view of the position of the spring ring with the armrest of the vehicle interior component in the position shown in FIGs. 2G and 2H, FIG. 7D is a cross-sectional schematic view of the position of the clutch wheel with the armrest of the vehicle interior component in the position shown in FIGs. 2G and 2H, and FIG. 7E is a cross-sectional schematic view of the vehicle interior component at a position parallel to the rotating shaft and passing through the spring ring with the armrest of the vehicle interior component in the position shown in FIGs. 2G and 2H. FIGs. 7A-7C are the same as FIGs. 6A-6C above, and illustrate that the positional relationship of the parts in the axial cross section of the position of the rotating shaft, the cross section of the position of the sprag and the cross section of the position of the spring ring is not changed, and therefore the outer ring 11 is kept in the unlocking state. FIGs. 6D, 6E, 7D and 7E show that the clutch wheel 23 can be relatively rotated relative to the unlocking ring 21 by being pushed by the stroke control ribs 115 of the outer ring 11 when the trapezoidal ribs 214 of the unlocking ring 21 are disengaged from the trapezoidal grooves 234 of the clutch wheel 23.

When the armrest A rotates to the maximum open position, the pressure applied by the disc spring 32 to the friction damping ring 33 is transmitted to the rotating bracket 4 and then to the positioning friction damping ring 36 through the rotating bracket 4, which facilitates sufficient friction between the friction damping ring 36 and the sleeves 31 to ensure that the armrest A keeps stable in the maximum open position.

### (The armrest returns from the maximum open position shown in FIGs. 2G and 2H through the position shown in FIG. 2I to the initial closed position shown in FIG. 2J.)

FIGs. 8A-8E are cross-sectional schematic views of a vehicle interior component having the one-way bearing assembly according to the present invention with an armrest of the vehicle interior component in the position shown in FIG. 2I, wherein FIG. 8A is an axial cross-sectional schematic view of the vehicle interior component at the rotating shaft with the armrest of the vehicle interior component in the position shown in FIG. 2I, FIG. 8B is a cross-sectional schematic view of the position of the sprag with the armrest of the vehicle interior component in the position shown in FIG. 2I, FIG. 8C is a cross-sectional schematic view of the position of the spring ring with the armrest of the vehicle interior component in the position shown in FIG. 2I, FIG. 8D is a cross-sectional schematic view of the position of the clutch wheel with the armrest of the vehicle interior component in the position shown in FIG. 2I, and FIG. 8E is a cross-sectional schematic view of the vehicle interior component at a position parallel to the rotating shaft and passing through the spring ring with the armrest of the vehicle interior component in the position shown in FIG. 2I. FIGs. 8A-8C are the same as FIGs. 7A-7C above, and illustrate that the positional relationship of the parts in the axial cross section of the position of the rotating shaft, the cross section of the position of the sprag and the cross section of the position of the spring ring is not changed, and therefore the outer ring 11 is kept in the unlocking state.

FIGs. 9A-9E are cross-sectional schematic views of a vehicle interior component having the one-way bearing assembly according to the present invention with an armrest of the vehicle interior component in the position shown in FIG. 2J, wherein FIG. 9A is an axial cross-sectional schematic view of the vehicle interior component at the rotating shaft with the armrest of the vehicle interior component in the position shown in FIG. 2J, FIG. 9B is a cross-sectional schematic view of the position of the sprag with the armrest of the vehicle interior component in the position shown in FIG. 2J, FIG. 9C is a cross-sectional schematic view of the position of the spring ring with the armrest of the vehicle interior component in the position shown in FIG. 2J, FIG. 9D is a cross-sectional schematic view of the position of the clutch wheel with the armrest of the vehicle interior component in the position shown in FIG. 2J, and FIG. 9E is a cross-sectional schematic view of the vehicle interior component at a position parallel to the rotating shaft and passing through the spring ring with the armrest of the vehicle interior component in the position shown in FIG. 2J.

As shown in FIGs. 8A-8E and 9A-9E, when the armrest A reversely rotates from the maximum open position shown in FIGs. 2G and 2H to the initial position, the outer ring 11 rotates counterclockwise, the stroke control ribs 115 of the outer ring 11 contact the start end surfaces 2331 of the stroke control slots 233 of the clutch wheel 23, and then the outer ring 11 (i.e., the stroke control ribs 115 of the outer ring 11) starts to rotate the clutch wheel 23 counterclockwise as shown in FIGs. 8D and 9D until the trapezoidal grooves 234 of the clutch wheel 23 reengage with the trapezoidal ribs 214 of the unlocking ring 21 and contact the start end surfaces 2341 of the trapezoidal grooves 234 as shown in FIGs. 9D and 9E, so that the clutch wheel 23 drives the unlocking ring 21 to rotate counterclockwise. The counterclockwise rotation of the unlocking ring 21 causes the unlocking ribs 213 on the unlocking ring 21 to push the stop surface 147 of the brake sprag 14 to rotate counterclockwise until, as shown in FIG. 9B, the inner arc surface 143 and the outer arc surface 144 of the brake sprag 14 are again tangent to the outer wall surface 162 of the inner ring 16 and the inner wall surface 113 of the outer ring 11, and as shown in FIG. 9C, the spring ring 15 is again contacted with the fifth arc surface 1451, the outer ring 11 is once again one-way locked, the unlocking mechanism 2 switches the armrest A to the locking state, and at this case, the armrest A returns to the initial position.

It can be understood from the present embodiment, the unlocking ring 21 is disposed inside and proximate to the rotating ring (the outer ring 11), and the deflection direction of the brake sprag 14 is set to be the same as the rotation direction of the unlocking ring 21. It can be conceivable that the unlocking ring 21 may be disposed outside and proximate the rotating ring such that the deflection direction of the brake sprag 14 is opposite the rotation direction of the unlocking ring 21.

It can be understood from the present embodiment, the outer ring 11 is provided as a rotating ring while the inner ring 16 is provided as a fixed ring. It can be conceivable that the outer ring 11 can also be provided as a fixed ring while the inner ring 16 is provided as a rotating ring. Whether the outer ring 11 or the inner ring 16 is provided as a rotating ring, when the rotating ring is in the locking state, the rotating ring can only rotate in one direction, and cannot rotate in the opposite direction; only when the rotating ring is in the unlocking state can the rotating ring rotate in two different directions.

The unlocking ring 21 can only be provided proximate to the rotating ring in the present embodiment. When the unlocking ring 21 is disposed proximate to the rotating ring, the unlocking ring 21 rotates in the same direction as the rotatable direction of the rotating ring in the locking state, so that the rotating ring is switched from the locking state to the unlocking state.

### Embodiment 2: lifting cup holder comprising sliding rail mechanism having the one-way bearing assembly

A sliding rail mechanism having the one-way bearing assembly according to a preferred embodiment of the present invention will be then described below.

The sliding rail mechanism is configured for the lifting cup holder CH in the interior of a vehicle. The lifting cup holder CH, as shown in FIGs. 28-29, comprises a base B having an opening O, a cover C (the cover C is also an armrest) for covering the opening O, and a sliding rail mechanism. The sliding rail mechanism is provided to slide the cover C relative to the base B between a closed position, a use position and an unlocking position. The cover C covers the opening O in the closed position, the cover C exposes the opening O in the use position and is fixed to the base B for receiving a beverage container, and the cover C can move relative to the base towards the closed position in the unlocking position.

The sliding rail mechanism comprises a rack 71 configured to move together with the cover C and a gear 116 configured to engage with the rack 71, wherein the axial center of the gear 116 is fixedly connected with the base B, the axial center of the gear 116 is fixedly connected with the base B through a fixed bracket 6, and the rack is located on a sliding bracket connected with the cover C. The sliding rail mechanism further comprises a one-way bearing assembly mounted on the fixed bracket 6. The one-way bearing assembly here adopts the unlocking ring 21', the clutch wheel 23' and the clutch positioning ring 34a' as shown in FIGs. 24-25, and adds the gear 116 on the outer ring 11, and the inner ring of the one-way bearing assembly fixedly connects the axial center of the gear 116 with the base B. The lifting cup holder CH further comprises a coil spring 72 connecting the sliding bracket 7 and the base B to provide a force to move the cover C from the unlocking position to the closed position.

When the cover C is at the closed position, the cover C is flush with the outer peripheral surface of the opening O. When the cup holder is used, a water cup or a water bottle is placed on the cover C, the water bottle is pressed to push the cover C to descend, and the cup holder stops at any position before reaching the unlocking position of the one-way bearing assembly, so that the plurality of use positions of the lifting cup holder can be achieved. When the cover C is to be closed, the water bottle is pressed or the cover descends to reach the unlocking position, then the water cup is taken away or the pressure is relieved, and the cover C can automatically return to the closed position under the action of the coil spring 72. The working stroke of the cover C of the lifting cup holder when descending is equivalent to the overturning opening stroke of the rotating bracket 4 of the rotating shaft mechanism, and the stroke of the cover C from the lowest use position to the unlocking position is equivalent to the unlocking stroke in the rotating shaft mechanism. No further description is given here.

The above description is only a preferred embodiment of the present invention, and is not intended to limit the scope of the present invention, and various modifications can be made to the above-described embodiment of the present invention. All simple and equivalent changes and modifications made according to the claims of the present application fall within the scope of the claims of the present invention. What has not been described in greater detail in the present invention is all conventional technique.

## Claims

1. A vehicle interior component, comprising:
- a base (B) comprising an opening;
- an armrest (A) configured to cover the opening of the base (B) and configured to move around a rotating shaft from a closed position through a load-bearing position to a maximum open position; and
- a mechanism connecting the armrest (A) to the base (B) and configured to
(a) facilitate the movement of the armrest (A) from the closed position to the load-bearing position,
(b) maintain the armrest (A) in the load-bearing position when the armrest (A) moves from the closed position to the load-bearing position, and
(c) restrict the armrest (A) from moving from the load-bearing position to the closed position,
wherein the mechanism comprises a fixed ring (16) fixed to the rotating shaft and a rotating ring (11) configured to rotate with the armrest (A);
**characterised in that** at least one sprag (14) is disposed between the rotating ring (11) and the fixed ring (16);
wherein the at least one sprag (14) is eccentrically tangent to the rotating ring (11) and to the fixed ring (16) when the rotating ring (11) is in the locking state forming a self-locking angle respectively; and
a gap is formed between the sprag (14) and at least one of the rotating ring (11) and the fixed ring (16) when the rotating ring (11) is in the unlocking state.

2. The vehicle interior component of Claim 1 wherein the rotating shaft is fixed to a fixed bracket (5), the base (B) is connected to the fixed bracket, and the armrest (A) is connected to the rotating ring by a rotating bracket (4).

3. The vehicle interior component of Claim 2 wherein spline holes (51) are disposed at two axial ends of the fixed bracket (5), bracket spline holes (41) are disposed at the rotating bracket (4), a shaft sleeve (31), a disc spring (32) and a friction damping ring (33) are sequentially mounted between one spline hole (51) of the fixed bracket and the bracket spline hole (41) of the rotating bracket (4), the shaft sleeve (31) is fixed on the fixed bracket (5), and the friction damping ring (33) abuts against the rotating bracket (4); another shaft sleeve and a positioning friction damping ring are mounted between the other spline hole of the fixed bracket and the rotating bracket.

4. The vehicle interior component of any one of Claims 1 to 3 wherein the mechanism comprises a rack (71) configured to move with the armrest (A) and a gear (116) configured to engage the rack (71), and the axial center of the gear (116) is fixedly connected with the base (B).

5. The vehicle interior component of Claim 4 wherein the axial center of the gear is fixedly connected to the base (B) by a fixed bracket (6), and the rack (71) is located on a sliding bracket (7) connected to the armrest (A).

6. The vehicle interior component of Claim 4 wherein the mechanism comprises a fixed ring (16) fixedly connecting the axial center of the gear (116) to the base (B); and wherein the gear (116) is disposed on a rotating ring (11).

7. The vehicle interior component of Claim 1 or 6 wherein the rotating ring (11) is axially aligned with the fixed ring (16).

8. The vehicle interior component of Claim 6 or 7 further comprising a cage for receiving the at least one sprag (14); wherein the cage is disposed stationary relative to the fixed ring (16).

9. The vehicle interior component of any one of Claims 1 to 8 wherein the mechanism comprises an unlocking mechanism (2) provided to switch the armrest (A) between a locking state and an unlocking state and to allow the movement of the armrest (A) from the load-bearing position to the closed position when the armrest (A) is in the unlocking state.

10. The vehicle interior component of Claim 9 wherein the unlocking mechanism (2) comprises an unlocking ring (21) disposed between the rotating ring (11) and the fixed ring (16), and the rotating ring (11) switches between the locking state and the unlocking state in response to rotation of the unlocking ring (21).

11. The vehicle interior component of Claim 10 wherein the unlocking ring (21) comprises at least one unlocking rib (213) on the same circular arc trajectory; wherein the at least one sprag (14) comprises an opposing stop surface (147) and an unlocking surface (146); wherein the stop surface (147) is in close contact with the unlocking rib when the rotating ring (11) is in the locking state; and wherein the unlocking surface (146) is in close contact with the unlocking rib when the rotating ring (11) is in the unlocking state.

12. The vehicle interior component of any one of Claims 1 to 11 further comprising a coil spring connected to both the base (B) and the armrest (A) to provide a force to move the armrest (A) toward the closed position.

## Patentansprüche

1. Fahrzeuginnenraumkomponente, welche Folgendes aufweist:
- eine Basis (B), die eine Öffnung aufweist;
- eine Armlehne (A), die so konfiguriert ist, dass sie die Öffnung der Basis (B) abdeckt, und so konfiguriert ist, dass sie sich um eine Drehwelle von einer geschlossenen Position durch eine lasttragende Position zu einer maximalen offenen Position bewegt; und
- einen Mechanismus, der die Armlehne (A) mit der Basis (B) verbindet und so konfiguriert ist, dass er
(a) die Bewegung der Armlehne (A) von der geschlossenen Position in die lasttragende Position erleichtert,
(b) die Armlehne (A) in der lasttragenden Position hält, wenn sich die Armlehne (A) von der geschlossenen Position in die lasttragende Position bewegt, und
(c) die Armlehne (A) daran hindert, sich von der lasttragenden Position in die geschlossene Position zu bewegen,
wobei der Mechanismus einen feststehenden Ring (16), der an der Drehwelle befestigt ist, und einen sich drehenden Ring (11) aufweist, der so konfiguriert ist, dass er sich mit der Armlehne (A) dreht;
**dadurch gekennzeichnet,**
**dass** mindestens ein Klemmkörper (14) zwischen dem sich drehenden Ring (11) und dem feststehenden Ring (16) angeordnet ist;
wobei der mindestens eine Klemmkörper (14) den sich drehenden Ring (11) und den feststehenden Ring (16) exzentrisch tangiert, wenn der sich drehende Ring (11) sich im Verriegelungszustand befindet bzw. einen sich selbst verriegelnden Winkel bildet; und
**dass** ein Spalt zwischen dem Klemmkörper (14) und mindestens einem von dem sich drehenden Ring (11) und dem feststehenden Ring (16) gebildet wird, wenn sich der sich drehende Ring (11) im Entriegelungszustand befindet.

2. Fahrzeuginnenraumkomponente nach Anspruch 1, wobei die Drehwelle an einer feststehenden Halterung (5) befestigt ist, die Basis (B) mit der feststehenden Halterung verbunden ist und die Armlehne (A) durch eine sich drehende Halterung (4) mit dem sich drehenden Ring verbunden ist.

3. Fahrzeuginnenraumkomponente nach Anspruch 2, wobei Kerbverzahnungslöcher (51) an zwei axialen Enden der feststehenden Halterung (5) angeordnet sind, Halterungskerbverzahnungslöcher (41) an der sich drehenden Halterung (4) angeordnet sind, eine Wellenhülse (31), eine Tellerfeder (32) und ein Reibungsdämpfungsring (33) nacheinander zwischen einem Kerbverzahnungsloch (51) der feststehenden Halterung und dem Halterungskerbverzahnungsloch (41) der sich drehenden Halterung (4) montiert sind, die Wellenhülse (31) an der feststehenden Halterung (5) befestigt ist und der Reibungsdämpfungsring (33) an der sich drehenden Halterung (4) anliegt; wobei eine weitere Wellenhülse und ein Positionierungsreibungsdämpfungsring zwischen dem anderen Kerbverzahnungsloch der feststehenden Halterung und der sich drehenden Halterung montiert sind.

4. Fahrzeuginnenraumkomponente nach einem der Ansprüche 1 bis 3, wobei der Mechanismus eine Zahnstange (71), die so konfiguriert ist, dass sie sich mit der Armlehne (A) bewegt, und ein Zahnrad (116) aufweist, das so konfiguriert ist, dass es in die Zahnstange (71) eingreift, und wobei die axiale Mitte des Zahnrads (116) fest mit der Basis (B) verbunden ist.

5. Fahrzeuginnenraumkomponente nach Anspruch 4, wobei das axiale Zentrum des Zahnrads durch eine feststehende Halterung (6) fest mit der Basis (B) verbunden ist und die Zahnstange (71) auf einer verschiebbaren Halterung (7) angeordnet ist, die mit der Armlehne (A) verbunden ist.

6. Fahrzeuginnenraumkomponente nach Anspruch 4, wobei der Mechanismus einen feststehenden Ring (16) aufweist, der das axiale Zentrum des Zahnrads (116) fest mit der Basis (B) verbindet; und wobei das Zahnrad (116) auf einem sich drehenden Ring (11) angeordnet ist.

7. Fahrzeuginnenraumkomponente nach Anspruch 1 oder 6, wobei der sich drehende Ring (11) axial mit dem feststehenden Ring (16) ausgerichtet ist.

8. Fahrzeuginnenraumkomponente nach Anspruch 6 oder 7, die ferner einen Käfig zur Aufnahme des mindestens einen Klemmkörpers (14) aufweist, wobei der Käfig relativ zum feststehenden Ring (16) stationär angeordnet ist.

9. Fahrzeuginnenraumkomponente nach einem der Ansprüche 1 bis 8, wobei der Mechanismus einen Entriegelungsmechanismus (2) aufweist, der vorgesehen ist, um die Armlehne (A) zwischen einem Verriegelungszustand und einem Entriegelungszustand umzuschalten und die Bewegung der Armlehne (A) von der lasttragenden Position in die geschlossene Position zu ermöglichen, wenn sich die Armlehne (A) im Entriegelungszustand befindet.

10. Fahrzeuginnenraumkomponente nach Anspruch 9, wobei der Entriegelungsmechanismus (2) einen Entriegelungsring (21) aufweist, der zwischen dem sich drehenden Ring (11) und dem feststehenden Ring (16) angeordnet ist, und der sich drehende Ring (11) als Reaktion auf die Drehung des Entriegelungsrings (21) zwischen dem Verriegelungszustand und dem Entriegelungszustand umschaltet.

11. Fahrzeuginnenraumkomponente nach Anspruch 10, wobei der Entriegelungsring (21) mindestens eine Entriegelungsrippe (213) auf derselben Kreisbogenbahn aufweist; wobei der mindestens eine Klemmkörper (14) eine gegenüberliegende Anschlagfläche (147) und eine Entriegelungsfläche (146) aufweist; wobei die Anschlagfläche (147) in engem Kontakt mit der Entriegelungsrippe steht, wenn sich der sich drehende Ring (11) im Verriegelungszustand befindet; und wobei die Entriegelungsfläche (146) in engem Kontakt mit der Entriegelungsrippe steht, wenn sich der sich drehenden Ring (11) im Entriegelungszustand befindet.

12. Fahrzeuginnenraumkomponente nach einem der Ansprüche 1 bis 11, welche ferner eine Schraubenfeder aufweist, die sowohl mit der Basis (B) als auch mit der Armlehne (A) verbunden ist, um eine Kraft bereitzustellen, um die Armlehne (A) zu der geschlossenen Position hinzubewegen.

## Revendications

1. Composant d'intérieur de véhicule, comprenant :
- une base (B) comprenant une ouverture ;
- un accoudoir (A) configuré pour recouvrir l'ouverture de la base (B) et configuré pour se déplacer autour d'un arbre rotatif depuis une position fermée à travers une position de support de charge jusqu'à une position ouverte maximum ; et
- un mécanisme connectant l'accoudoir (A) à la base (B) et configuré pour
(a) faciliter le déplacement de l'accoudoir (A) depuis la position fermée jusqu'à la position de support de charge,
(b) maintenir l'accoudoir (A) dans la position de support de charge quand l'accoudoir (A) se déplace depuis la position fermée jusqu'à la position de support de charge, et
(c) empêcher l'accoudoir (A) de se déplacer depuis la position de support de charge jusqu'à la position fermée,
dans lequel le mécanisme comprend un anneau fixe (16) fixé au bras rotatif et un anneau rotatif (11) configuré pour être mis en rotation avec l'accoudoir (A) ;
**caractérisé en ce que**
au moins un clabot (14) est disposé entre l'anneau rotatif (11) et l'anneau fixe (16) ;
dans lequel ledit au moins un clabot (14) est tangent de manière excentrique à l'anneau rotatif (11) et à l'anneau fixe (16) quand l'anneau rotatif (11) est dans l'état de blocage formant un angle d'auto-blocage respectivement ; et
un intervalle est formé entre le clabot (14) et l'un au moins de l'anneau rotatif (11) et de l'anneau fixe (16) quand l'anneau rotatif (11) est dans l'état de déblocage.

2. Composant d'intérieur de véhicule selon la revendication 1, dans lequel l'arbre rotatif est fixé à une monture fixe (5), la base (B) est connectée à la monture fixe, et l'accoudoir (A) est connecté à l'anneau rotatif par le biais d'une monture rotative (4).

3. Intérieur de véhicule selon la revendication 2, dans lequel des trous à cannelure (51) sont disposés au niveau de deux extrémités axiales de la monture fixe (5), des trous à cannelure de monture (51) sont disposés au niveau de la monture rotative (4), un manchon d'arbre (31), un ressort de disque (32) et un anneau amortisseur de frottement (33) sont montés séquentiellement entre le trou à cannelure (51) de la monture fixe et le trou de cannelure de monture (41) de la monture rotative (4), le manchon d'arbre (31) est fixé sur la monture fixe (5), et l'anneau amortisseur de frottement (33) vient en butée contre la monture rotative (4) ; un autre manchon d'arbre et un anneau amortisseur de frottement de positionnement sont montés entre l'autre trou à cannelure de la monture fixe et de la monture rotative.

4. Composant d'intérieur de véhicule selon l'une quelconque des revendications 1 à 3, dans lequel le mécanisme comprend une crémaillère (71) configurée pour se déplacer avec l'accoudoir (A) et un pignon (116) configuré pour engager la crémaillère (71), et le centre axial du pignon (116) est connecté de manière fixe à la base (B).

5. Composant d'intérieur de véhicule selon la revendication 4, dans lequel le centre axial du pignon est connecté de manière fixe à la base (B) par le biais d'une monture fixe (6), et la crémaillère (71) est située sur une monture coulissante (7) connectée à l'accoudoir (A).

6. Composant d'intérieur de véhicule selon la revendication 4, dans lequel le mécanisme comprend un anneau fixe (16) connectant de manière fixe le centre axial du pignon (116) à la base (B) ; et dans lequel le pignon (116) est disposé sur un anneau rotatif (11).

7. Composant d'intérieur de véhicule selon la revendication 1 ou 6, dans lequel l'anneau rotatif (11) est aligné de manière axiale avec l'anneau fixe (16).

8. Composant d'intérieur de véhicule selon la revendication 6 ou 7, comprenant en outre une cage destinée à recevoir ledit au moins un clabot ; dans lequel la cage est disposée de manière stationnaire relativement à l'anneau fixe (16).

9. Composant d'intérieur de véhicule selon l'une quelconque des revendications 1 à 8, dans lequel le mécanisme comprend un mécanisme de déblocage (2) prévu pour faire passer l'accoudoir (A) entre un état de blocage et un état de déblocage et pour permettre le déplacement de l'accoudoir (A) depuis la position de support de charge jusqu'à la position fermée quand l'accoudoir (A) est dans l'état de déblocage.

10. Composant d'intérieur de véhicule selon la revendication 9, dans lequel le mécanisme de déblocage (2) comprend un anneau de déblocage (21) disposé entre l'anneau rotatif (11) et l'anneau fixe (16), et l'anneau rotatif (11) passe entre l'état de blocage et l'état de déblocage en réponse à une rotation de l'anneau de déblocage (21).

11. Composant d'intérieur de véhicule selon la revendication 10, dans lequel l'anneau de déblocage (21) comprend au moins une nervure de déblocage (213) sur la même trajectoire d'arc circulaire ; dans lequel ledite au moins un clabot (14) comprend une surface d'arrêt opposée (147) et une surface de déblocage (146) ; dans lequel la surface d'arrêt (147) est en contact étroit avec la nervure de déblocage quand l'anneau rotatif (11) est dans l'état de blocage ; et dans lequel la surface de déblocage (146) est en contact étroit avec la nervure de déblocage quand l'anneau rotatif (11) est dans l'état de déblocage.

12. Composant d'intérieur de véhicule selon l'une quelconque des revendications 1 à 11, comprenant en outre un ressort à boudin connecté à la fois à la base (B) et à l'accoudoir (A) pour fournir une force permettant de déplacer l'accoudoir (A) vers la position fermée.
